(19) Europäisches Patentamt / European Patent Office / Office européen des brevets

(11) **EP 2 557 794 A1**

(12) **EUROPEAN PATENT APPLICATION**
published in accordance with Art. 153(4) EPC

(43) Date of publication:
**13.02.2013 Bulletin 2013/07**

(51) Int Cl.:
***H04N 7/32*** *(2006.01)*

(21) Application number: **11765842.7**

(22) Date of filing: **01.04.2011**

(86) International application number:
**PCT/JP2011/058439**

(87) International publication number:
**WO 2011/125942 (13.10.2011 Gazette 2011/41)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **08.04.2010 JP 2010089629**

(71) Applicant: **NTT Docomo, Inc.**
**Tokyo 100-6150 (JP)**

(72) Inventors:
• **FUJIBAYASHI Akira**
**Tokyo 100-6150 (JP)**

• **BOON Choong Seng**
**Tokyo 100-6150 (JP)**
• **KANUMURI Sandeep**
**Tokyo 100-6150 (JP)**
• **TAN Thiow Keng**
**Tokyo 100-6150 (JP)**

(74) Representative: **Viering, Jentschura & Partner**
**Am Brauhaus 8**
**01099 Dresden (DE)**

(54) **MOVING IMAGE PREDICTION ENCODER APPARATUS, MOVING IMAGE PREDICTION DECODER APPARATUS, MOVING IMAGE PREDICTION ENCODING METHOD, MOVING IMAGE PREDICTION DECODING METHOD, MOVING IMAGE PREDICTION ENCODING PROGRAM, AND MOVING IMAGE PREDICTION DECODING PROGRAM**

(57) An object is to improve the quality of a reproduced picture and improve the efficiency of predicting a picture using the reproduced picture as a reference picture. For this object, a video prediction encoder 1 comprises an input terminal 101 which receives a plurality of pictures in a video sequence; an encoder which encodes an input picture by intra-frame prediction or inter-frame prediction to generate compressed data and encodes parameters for luminance compensation prediction between blocks in the picture; a restoration device which decodes the compressed data to restore a reproduced picture; a filtering processor 113 which determines a filtering strength and a target region to be filtered, using the parameters for luminance compensation prediction between the blocks and performs filtering on the reproduced picture, according to the filtering strength and the target region to be filtered; and a frame memory 104 which stores the filtered reproduced picture, as a reference picture.

*Fig.1*

**Description**

**Technical Field**

The present invention relates to a video prediction encoder, video prediction decoder, video prediction encoding method, video prediction decoding method, video prediction encoding program, and video prediction decoding program.

**Background Art**

Compression techniques are used for efficient transmission and storage of video data. The techniques according to MPEG1-4 and H.261-H.264 are widely used for compressing moving images. In these compressing techniques, a target picture to be encoded is divided into a plurality of blocks which are then subjected to encoding and decoding. The prediction encoding methods as described below are used for enhancement of encoding efficiency.

In intra-frame prediction encoding, a prediction signal of a target block to be encoded is generated using a previously-reproduced image signal (a signal restored from previously compressed image data) of a block located adjacent to the target block in the same frame, and then the prediction signal is subtracted from a signal of the target block to derive a difference signal which is a subject of encoding. In inter-frame prediction encoding, a previously-reproduced image signal in a different frame is referenced to determine a displacement (motion) of signal. The displacement is compensated to produce a prediction signal, and the prediction signal is subtracted from the signal of the target block to derive a difference signal which is a subject of encoding. The previously-reproduced picture which is referenced for the motion determination and compensation is called a reference picture.

In bidirectional inter-frame prediction, not only a past picture displayed prior to a target picture (a picture located prior to the target picture when arranged in a display time order), but also to a future picture displayed subsequent to the target picture are referenced. It should be noted herein that the future picture needs to be encoded and reproduced before the target picture is encoded. By averaging prediction signals derived from the past and future pictures, it becomes possible to predict a signal from an object which becomes visible from an invisible state and reduce noise included in both of the prediction signals.

Furthermore, in the inter-frame prediction encoding of H.264, a plurality of reference pictures which have been previously encoded and reproduced are referenced to determine displacements, and a picture signal with the smallest error is selected as an optimum prediction signal for the target block. Then, a difference is calculated between a pixel signal of the target block and the optimum prediction signal, and the difference is subjected to discrete cosine transform (DCT), quantization, and entropy encoding. At the time that entropy encoding is performed, information is also encoded which indicates the identity of the reference picture and the location of the optimum prediction signal within the reference picture for the target block (the information is called a reference index and a motion vector). In H.264, four or five reference pictures among reproduced pictures are stored in a frame memory or a reproduced picture buffer.

Since the difference signal is quantized, a quantization distortion appears when the difference signal is decoded. This quantization distortion degrades the quality of the reproduced picture itself. In encoding methods using the inter-frame prediction, a quantization distortion in a reproduced picture gives rise to degradation of the quality of a target picture encoded using the reproduced picture as a reference picture.

In encoding methods in which a picture is divided into blocks, quantization distortions are likely to occur at boundaries between the blocks. These distortions are called block distortions. For this reason, H.264 uses a deblocking filter the strength of whose filtering effect is adjusted according to conditions of a block boundary to be processed. In the deblocking filter, the strength of its filtering effect to be applied to a block boundary is determined based on whether there are any differences in a type of the block (inter-frame prediction or intra-frame prediction) which includes pixels representing the boundary and in the information (including a motion vector and a reference index) used for generation of the prediction signal, and whether the boundary constitutes a macroblock boundary. The number of pixels to be filtered and a type of filter are determined according to the determined strength of the filtering effect.

Unlike filters effective only to specific quantization distortions, such as block distortions or ringing distortions, Patent Literature 1 discussed below discloses an encoding method using a nonlinear filter to remove quantization distortions in general. The filter described in Patent Literature 1 uses a difference in prediction mode and a magnitude of motion vector magnitude whose information is used in the encoding method to suppress quantization distortions based on an expectation value obtained from a reproduced picture.

Patent Literature 2 discussed below proposes a method in which when the brightness of video image varies with time, for example, when the image is fading-in (a video image becomes progressively bright from dark) or fading-out (a video image becomes progressively dark from bright and fades away), a luminance compensation prediction (also called Intensity Compensation) is applied to respective blocks which performs a prediction using a weight for brightness is used. In this method, two types of parameters about the luminance compensation prediction are set in respective blocks and prediction signals are generated using equation (1) below. In the equation, $P_{IC}(i,j)$ represents a luminance compensation prediction signal at a block position (i,j), and P(i,j) represents an ordinary prediction signal at the block position. Furthermore, weight$_{(i,j)}$ and offset$_{(i,j)}$ represent a weight and an offset (correction value) used to change the luminance of the prediction signal for a block (i,j), and these two types of parameters are also called IC parameters.

$$P_{IC}(i,j) = weight_{(i,j)} \times P(i,j) + offset_{(i,j)} \qquad (1)$$

**Citation List**

**Patent Literatures**

Patent Literature 1: U.S. Pat. Published Application No. 2006/0153301
Patent Literature 2: International Publication WO2006/128072

**Summary of Invention**

**Technical Problem**

In an encoding method in which the luminance compensation prediction is performed on each block, a distortion can be emphasized when brightness changes. In prior art, filtering is performed by setting the strength of filtering effect to remove block distortions and parameters to remove quantization distortions without regard to the values of the parameters used in the luminance compensation prediction performed on respective blocks. For this reason, there are cases where the image quality degrades due to excessive filtering which blurs the image or due to insufficient filtering which causes insufficient removal of block distortions or quantization distortions.
Therefore, there are demands for a new method which can improve the quality of reproduced pictures and improves the efficiency of predicting pictures encoded with the reproduced pictures used as reference pictures.

**Solution to Problem**

A video prediction encoder according to an embodiment of the present invention comprises input means which receives a plurality of pictures constituting a video sequence, encoding means which encodes a picture received by the input means, using at least one of intra-frame prediction and inter-frame prediction, to generate compressed data, and which encodes parameters used to perform the luminance compensation prediction between blocks obtained by dividing the picture, restoration means which decodes the compressed data generated by the encoding means to restore the picture as a reproduced picture; filtering means which determines the strength of filtering effect and a target region to be filtered, using at least the parameters to perform the luminance compensated prediction between the blocks, and performs filtering on the reproduced picture restored by the restoration means, according to the filtering strength and the target region to be filtered, and storage means which stores the reproduced picture filtered by the filtering means, as a reference picture to be used to encode subsequent pictures.
A video prediction encoding method according to an embodiment of the present invention is a video prediction encoding method executed by a video prediction encoder. The method comprises an input step of receiving a plurality of pictures constituting a video sequence, an encoding step of encoding a picture received in the input step, using at least one of intra-frame prediction and inter-frame prediction to generate compressed data, and encoding parameters used to perform the luminance compensation prediction between blocks obtained by dividing the picture, a restoration step of decoding the compressed data generated in the encoding step to restore the picture as a reproduced picture, a filtering step of determining the strength of filtering effect and a target region to be filtered, using at least the parameters to perform the luminance compensated prediction between the blocks, and performing filtering on the reproduced picture restored in the restoration step, according to the filtering strength and the target region to be filtered, and a storage step of storing, in storage means of the video prediction encoder, the reproduced picture filtered in the filtering step, as a reference picture to be used encode a subsequent picture.
A video prediction encoding program according to an embodiment of the present invention is executed by a computer to implement input means which receives a plurality of pictures constituting a video sequence, encoding means which encodes a picture received by the input means, using at least one of intra-frame prediction and inter-frame prediction, to generate compressed data, and which encodes parameters used to perform the luminance compensated prediction between blocks obtained by dividing the picture, restoration means which decodes the compressed data generated by the encoding means to restore the picture as a reproduced picture, filtering means which determines the strength of filtering effect and a target region to be filtered, using at least the parameters to perform the luminance compensation prediction between the blocks, and which perform filtering on the reproduced picture restored by the restoration means, according to the filtering strength and the target region to be filtered, and storage means which stores the reproduced picture filtered by the filtering means, as a reference picture to be used to encode a subsequent picture.

According to the video prediction encoder, video prediction encoding method, and video prediction encoding program as described above, a filtering strength and a target region to be filtered are determined based on the parameters used to perform the luminance compensated prediction between blocks and the reproduced picture is then filtered. Thereafter, the reproduced picture as filtered is stored as a reference picture to be used to encode a subsequent picture. By using, for filtering, the parameters to perform the luminance compensation prediction, even when there is a difference in luminance compensation prediction between blocks, it becomes possible to perform filtering according to the difference. As a result, it becomes possible to improve the quality of reproduced pictures and improve the efficiency of predicting pictures encoded with the reproduced pictures used as reference pictures.

In the video prediction encoding method according to an embodiment of the present invention, the filtering step may comprise determining whether the parameters are different between blocks adjacent to each other, based on a result of determination of which, the filtering strength and the target region to be filtered may be determined.

In this case, since the filtering strength and the target region to be filtered are determined based on a difference in the parameters between mutually adjacent blocks, it becomes possible to suppress block distortions likely to occur in a block boundary region. As a result, it becomes possible to improve the quality of reproduced pictures and the prediction efficiency for pictures.

In the video prediction encoding method according to an embodiment of the present invention, the parameters used to perform the luminance compensation prediction includes at least a first parameter and a second parameter. In the filtering, the first and second parameters of a block are compared with those of an adjacent block, and if both of the first and second parameters are different between the blocks, the filtering effect is set stronger than the filtering effect which is set when the first and second parameters are otherwise.

In the video prediction encoding method according to an embodiment of the present invention, the first and second parameters are compared between adjacent blocks and a motion vector difference between the blocks is also compared. The filtering effect is set to a first filtering strength if both of the first and second parameters are different between the blocks and the motion vector difference is equal to or greater than a predetermined value. The filtering effect is set to a second filtering strength if both of the first and second parameters both are different between the blocks and the motion vector difference is less than the predetermined value. The filtering effect is set to a third filtering strength if only one of the first and second parameters is different between the blocks. The first filtering strength may be greater than the second filtering strength, which may be greater than the third filtering strength.

In the video prediction encoding method according to an embodiment of the present invention, all of the first, second, and third filtering strengths may be set smaller than a filtering strength which is set when at least one of the adjacent blocks is encoded by the intra-frame prediction.

In the video prediction encoding method according to an embodiment of the present invention, the first and second parameters may be a weight and an offset, respectively, for changing pixel values of prediction signals of a block.

In this case, since the filtering strength and the target region to be filtered are determined, given the variations of difference of the two parameters for the luminance compensation prediction, the filtering becomes more adaptive.

A video prediction decoder according to an embodiment of the present invention comprises input means which receives first compressed data generated by encoding a plurality of pictures constituting a video sequence, using at least one of intra-frame prediction and inter-frame prediction, and second compressed data generated by encoding parameters for the luminance compensation prediction between blocks obtained by dividing the pictures, restoration means which decodes the first and second compressed data received by the input means to restore the pictures as reproduced pictures and to restore the parameters for the luminance compensation prediction between the blocks, filtering means which determines the strength of filtering effect and a target region to be filtered, using at least the parameters for the luminance compensation prediction between the blocks restored by the restoration means, and performs filtering on the reproduced pictures restored by the restoration means, according to the filtering strength and the target region to be filtered, and storage means which stores reproduced pictures filtered by the filtering means, as reference pictures to be used to decode subsequent pictures.

A video prediction decoding method according to an embodiment of the present invention is executed by a video prediction decoder. The method comprises an input step of receiving first compressed data generated by encoding a plurality of pictures constituting a video sequence, using at least one of intra-frame prediction and inter-frame prediction, and second compressed data generated by encoding parameters for the luminance compensation prediction between blocks obtained by dividing the pictures, a restoration step of decoding the first and second compressed data received in the input step to restore the pictures as reproduced pictures and to restore the parameters for the luminance compensation prediction between the blocks, a filtering process step of determining the strength of filtering effect and a target region to be filtered, using at least the parameters for the luminance compensation prediction between the blocks restored in the restoration step, and performing filtering on the reproduced pictures restored in the restoration step, according to the filtering strength and the target region to be filtered, and a storage step of storing, in storage means of the video prediction decoder, the reproduced pictures filtered in the filtering step, as reference pictures to be used to decode subsequent pictures.

A video prediction decoding program according to an embodiment of the present invention is executable by a computer to implement input means which receives first compressed data generated by encoding a plurality of pictures constituting a video sequence, using at least one of intra-frame prediction and inter-frame prediction, and second compressed data generated by encoding parameters for the luminance compensation prediction between blocks obtained by dividing the pictures, restoration means which decodes the first and second compressed data received by the input means to restore the pictures as reproduced pictures and to restore the parameters for the luminance compensation prediction between the blocks, filtering means which determines the strength of filtering effect and a target region to be filtered, using at least the parameters for the luminance compensation prediction between the blocks restored by the restoration means, and performs filtering on the reproduced pictures restored by the restoration means, according to the filtering strength and the target region to be filtered, and storage means which stores the reproduced pictures filtered by the filtering means, as reference pictures to be used to decode subsequent pictures.

According to the video prediction decoder, the video prediction decoding method, and the video prediction decoding program as described above, a filtering strength and a target region to be filtered are determined based on the parameters for the luminance compensation prediction between blocks and then filtering is performed on reproduced pictures. Thereafter, the filtered reproduced pictures are stored as reference pictures to be used to decode subsequent pictures. Since the filtering is performed, given the parameters for the luminance compensation prediction, even when there is a difference in luminance compensation prediction between blocks, the filtering can be performed according to the difference. As a result, it becomes possible to improve the quality of reproduced pictures and improve the efficiency of predicting pictures decoded with the reproduced pictures used as reference pictures.

In the video prediction decoding method according to an embodiment of the present invention, the filtering step may comprise determining whether the parameters are different between the adjacent blocks, based on a result of determination of which the filtering strength and the target region to be filtered may be determined.

In this case, since the filtering strength and the target region to be filtered are determined based on a difference of the parameters between the adjacent blocks, it becomes possible to suppress block distortions likely to occur in a block boundary region. As a result, it becomes possible to improve the quality of reproduced pictures and the efficiency of predicting pictures.

In the video prediction decoding method according to an embodiment of the present invention, the parameters for the luminance compensation prediction may include at least a first parameter and a second parameter. In the filtering step, the first and second parameters may be compared between the adjacent blocks, and if both of the first and second parameters are different between the blocks, the filtering strength may be set larger than the filtering strength which is set when the first and second parameter are otherwise.

In the video prediction decoding method according to an embodiment of the present invention, the filtering step may comprise comparing the first and second parameters between adjacent blocks and comparing a difference of motion vectors between the blocks. When both of the first and second parameters are different between the blocks, and the difference of the motion vectors is equal to or greater than a predetermined value, the filtering strength is set to a first filtering strength. When both of the first and second parameters are different between the blocks, and the difference of the motion vectors is less than the predetermined value, the filtering strength is set to a second filtering strength. When only one of the first and second parameters is different between the blocks, the filtering strength is set to a third filtering strength. The first filtering strength is greater than the second filtering strength, which is greater than the third filtering strength.

In the video prediction decoding method according to an embodiment of the present invention, all of the first, second, and third filtering strengths may be set smaller than a filtering strength which is set when at least one of the adjacent blocks is encoded by the intra-frame prediction.

In the video prediction decoding method according to an embodiment of the present invention, the first and second parameters may be a weight and an offset, respectively, for changing pixel values of prediction signals of the blocks.

In these cases, since the filtering strength and filtering target region are determined, given variations of differences of the two parameters for the luminance compensation prediction, filtering can be performed more adaptively.

**Advantageous Effects of Invention**

According to the video prediction encoder, the video prediction decoder, the video prediction encoding method, the video prediction decoding method, the video prediction encoding program, and video prediction decoding program as described above, since the filtering is performed, given the parameters for the luminance compensation prediction, it becomes possible to improve the quality of reproduced pictures and improve the efficiency of predicting pictures encoded with the reproduced pictures used as reference pictures.

**Brief Description of Drawings**

Fig. 1 is a block diagram showing a video prediction encoder according to an embodiment of the present invention.
Fig. 2 is a block diagram showing a functional configuration of a filtering processor shown in Fig. 1.
Fig. 3 is a drawing for explaining a process by a strength determination unit in Fig. 2.
Fig. 4 is a flowchart showing the process by the strength determination unit in Fig. 2.
Fig. 5 is a block diagram showing a functional configuration of a distortion removing processor shown in Fig. 2.
Fig. 6 is a drawing for explaining a process by a distortion remover shown in Fig. 5.
Fig. 7 is a drawing for explaining the process by the distortion remover shown in Fig. 5.
Fig. 8 is a drawing for explaining a process of a mask processor (mask function) shown in Fig. 2.
Fig. 9 is a flowchart showing an operation by a filtering processor 113 shown in Fig. 1.
Fig. 10 is a block diagram showing a video prediction decoder according to an embodiment of the present invention.
Fig. 11 is a drawing showing a video prediction encoding program according to an embodiment of the present invention.
Fig. 12 is a drawing showing a detailed configuration of a filtering module shown in Fig. 11.
Fig. 13 is a block diagram showing a video prediction decoding program according to an embodiment of the present invention.
Fig. 14 is a drawing showing a hardware configuration of a computer which executes the program.
Fig. 15 is a drawing showing a method of distributing the program.

**Description of Embodiments**

Embodiments of the present invention will be described below in detail with reference to the accompanying drawings. In the description of the drawings, identical or equivalent elements will be represented by the same reference signs, and redundant descriptions thereof will be omitted.

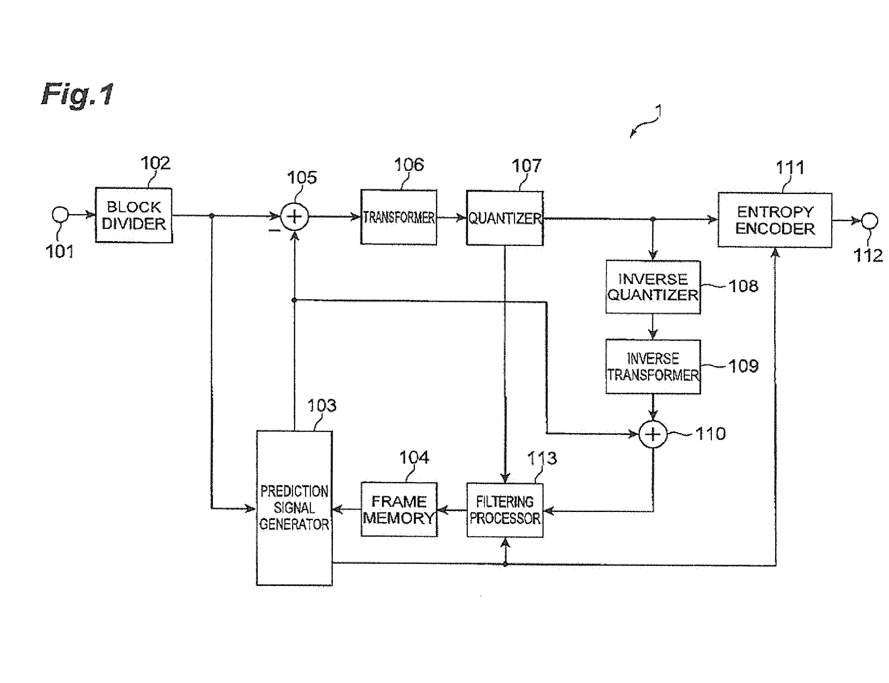

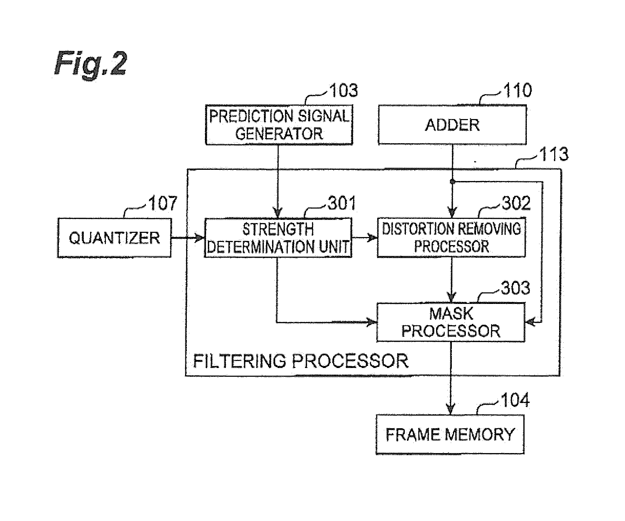

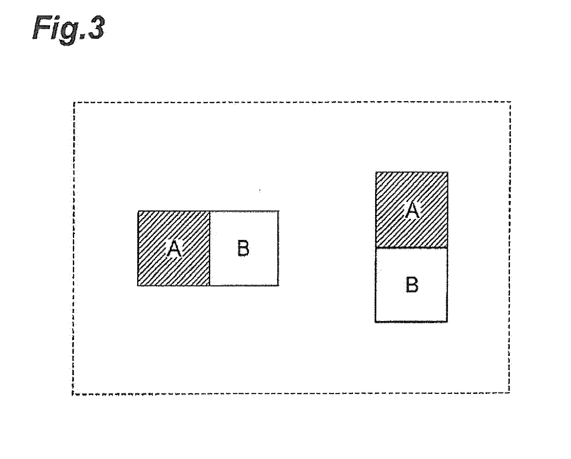

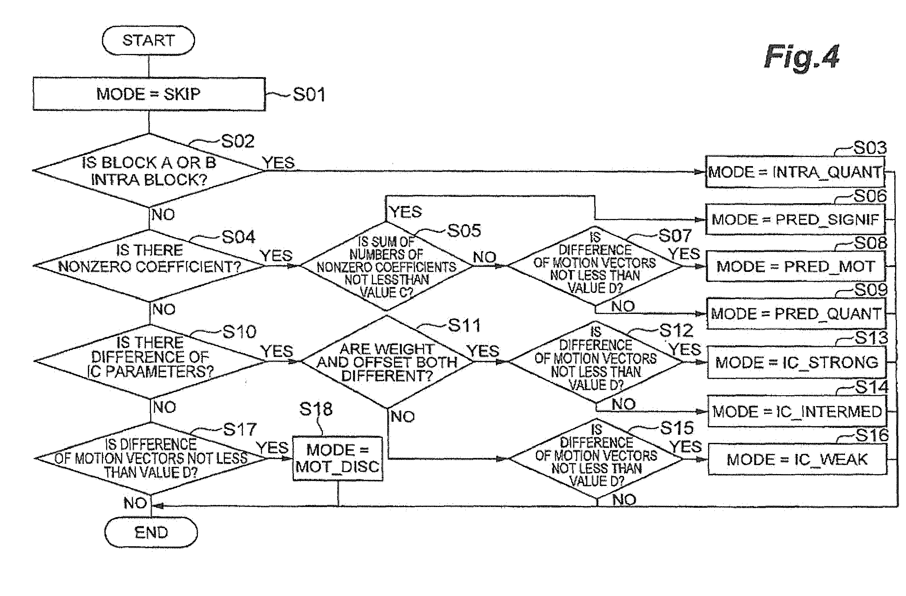

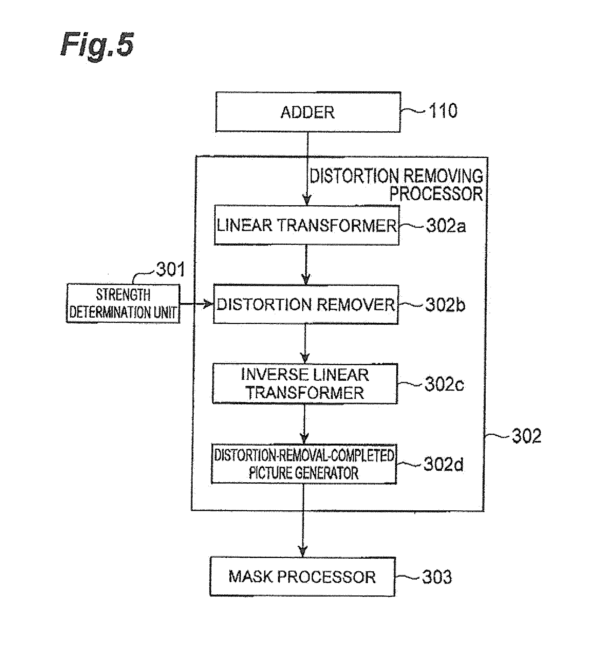

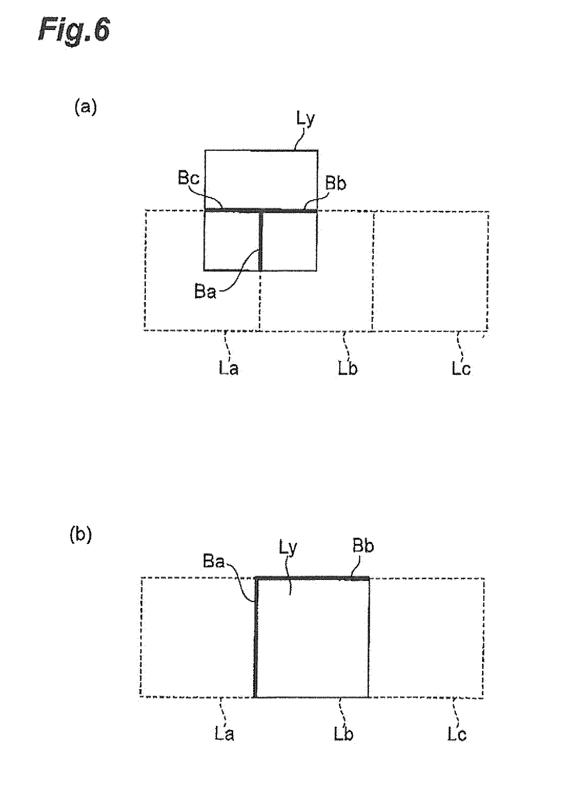

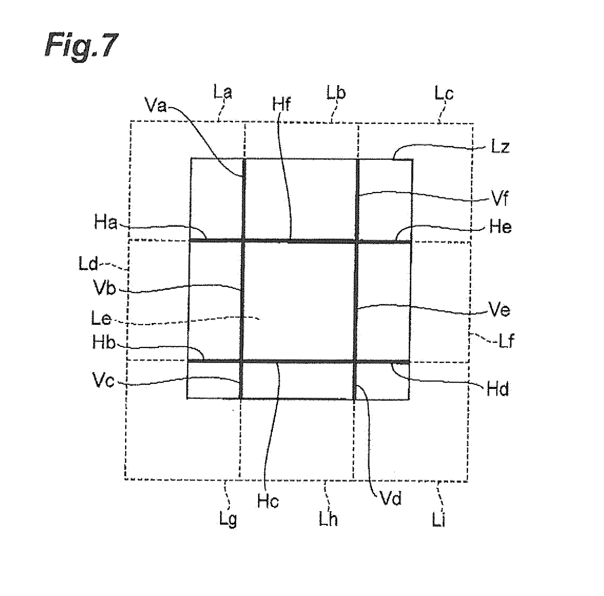

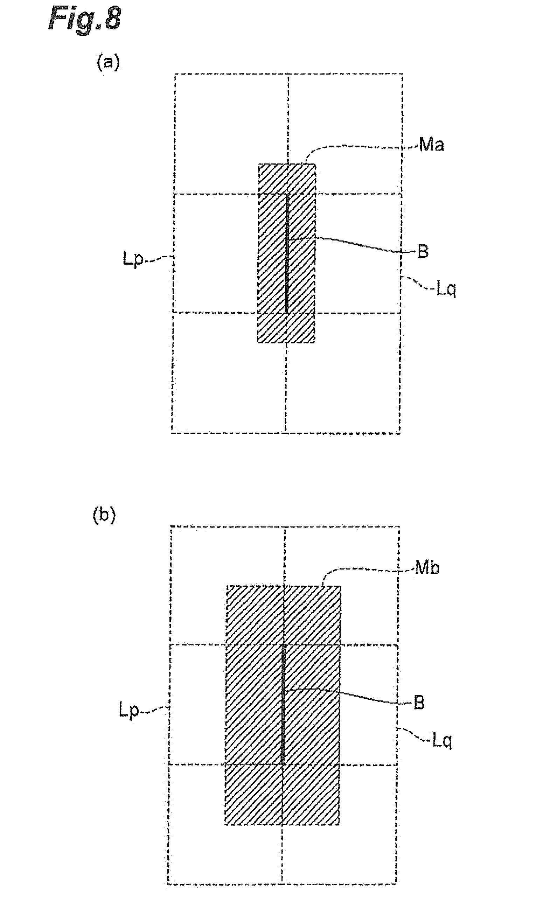

First, the functions and configuration of a video prediction encoder according to an embodiment of the present invention will be described using Figs. 1 to 8. Fig. 1 is a block diagram showing the functional configuration of a video prediction encoder 1 (which will also be referred to hereinafter simply as an encoder 1) according to the embodiment. Fig. 2 is a block diagram showing the functional configuration of a filtering processor 113. Fig. 3 is a drawing for explaining a process by a strength determination unit 301. Fig. 4 is a flowchart showing the process by the strength determination unit 301. Fig. 5 is a block diagram showing the functional configuration of a distortion removing processor 302. Figs. 6 and 7 are drawings for explaining a process by a distortion remover 302b. Fig. 8 is a drawing for explaining a process (a mask function) by a mask processor 303.

The encoder 1 comprises functional components which include an input terminal (input means) 101, a block divider 102, a prediction signal generator 103, a frame memory (storage means) 104, a subtracter 105, a transformer 106, a quantizer 107, an inverse quantizer 108, an inverse transformer 109, an adder 110, an entropy encoder 111, an output terminal 112, and a filtering processor (filtering process means) 113. The prediction signal generator 103, the subtracter 105, the transformer 106, the quantizer 107, and the entropy encoder 111 correspond to an encoding means which executes an encoding step. The inverse quantizer 108, the inverse transformer 109, and the adder 110 correspond to a restoration means which executes a restoration step.

The input terminal 101 is a means that receives a signal of respective pictures constituting a video sequence and outputs the received signal to the block divider 102. Namely, the input terminal 101 executes an input step.

The block divider 102 is a means that divides a picture received by the input terminal 101 into a plurality of regions (blocks). The block divider 102 performs this dividing process on each of the plurality of pictures. An encoding process is performed on each block obtained through this dividing process. Each block outputted from the block divider 102 will also be referred to hereinafter as a target block. In the present embodiment, the block divider 102 divides each picture into blocks each consisting of 8x8 pixels, but a picture may be divided into blocks of another size or a different shape (e.g., a block consisting of 4x4 or 16x16 pixels). The block divider 102 outputs a signal of a target block to the prediction signal generator 103 and the subtracter 105.

The prediction signal generator 103 is a means that generates a prediction signal for a target block. In the present embodiment, the prediction signal generator 103 generates a prediction signal, using at least one of two types of prediction methods, i.e., inter-frame prediction and intra-frame prediction.

It will be first described that inter-frame prediction is used. The prediction signal generator 103 uses reproduced pictures having been previously encoded and thereafter restored, as reference pictures, and from these reference pictures, the prediction signal generator 103 finds motion information that provides a prediction signal with the smallest error for a target block. This process is called motion detection. The reference pictures herein are distortion-removal-completed pictures described below. At this time, if necessary, the prediction signal generator 103 may subdivide the target block and determine an inter-frame prediction method to be performed on each of the subdivided small region. For example, the prediction signal generator 103 may subdivide an 8x8 target block into 4x4 small regions. In this case, the prediction signal generator 103 selects the most efficient division method for the entire target block among a variety of division methods and determines the motion information of each small region by the selected method.

The prediction signal generator 103 generates a prediction signal, using the signal of the target block fed from the block divider 102 and the reference pictures fed from the frame memory. The reference pictures herein are a plurality of pictures previously encoded and then restored, and the details of how they are obtained belong to prior art and are explained in MPEG-2, 4 or H.264.

The prediction signal generator 103 outputs the motion information and the small-region division method determined as described above to the entropy encoder 111 and the filtering processor 113. The prediction signal generator 103 also outputs, to the entropy encoder 111, information indicative of an identity of the reference picture (reference index), among the plurality of reference pictures, with which the prediction signal is acquired. In the present embodiment, four or five reproduced pictures are stored in the frame memory 104 and the prediction signal generator 103 uses those reproduced pictures as reference pictures.

The prediction signal generator 103 acquires a signal of a reference picture from the frame memory 104, based on the reference picture information and the motion information which correspond to the small-region division method and each small region, and generates for each block a prediction signal resulting from the luminance compensation prediction. The prediction signal generator 103 outputs the prediction signal generated by inter-frame prediction as described above (inter-frame prediction signal) to the subtracter 105 and the adder 110. The method implemented by the prediction signal generator to generate the inter-frame prediction signal may be a prior art method used in H. 264 or a method of generating a prediction signal for each target block using the luminance compensation prediction.

Next, it will be described that the intra-frame prediction is used. The prediction signal generator 103 generates a prediction signal (an intra-frame prediction signal), using the values of previously-reproduced pixels spatially adjacent to the target block and outputs the prediction signal to the subtracter 105 and the adder 110.

When both inter-frame prediction and intra-frame prediction are used, the prediction signal generator 103 selects one of the inter-frame prediction signal and the intra-frame signal which produces the smallest error and outputs the selected prediction signal to the subtracter 105 and the adder 110.

In addition to outputting the prediction signal as described above, the prediction signal generator 103 also outputs, to the entropy encoder 111 and the filtering processor 113, information, including the parameters for the luminance compensation prediction, necessary to generate the prediction signal.

The subtracter 105 is a means that subtracts the signal of the target block from the block divider 102 with the prediction signal from the prediction signal generator 103 to generate a residual signal. The transformer 106 is a means that performs a discrete cosine transform on the residual signal to generate transform coefficients. The quantizer 107 is a means that quantizes the transform coefficients and outputs the quantized transform coefficients to the entropy encoder 111, the inverse quantizer 108, and the filtering processor 113. The entropy encoder 111 is a means that encodes the quantized transform coefficients and the information relating to the prediction method and outputs compressed data thereof (first and second compressed data) to the output terminal 112. The output terminal 112 is a means that outputs (or transmits) the compressed data from the entropy encoder 111 to a video prediction decoder 2.

In order to perform the intra-frame prediction or the inter-frame prediction on a subsequent target block, the signal of the target block compressed by the subtracter 105, the transformer 106, and the quantizer 107 is restored through the inverse processing by the inverse quantizer 108, the inverse transformer 109, and the adder 110. The inverse quantizer 108 is a means that performs inverse quantization on the quantized transform coefficients to restore the transform coefficients. The inverse transformer 109 is a means that performs inverse discrete cosine transform on the restored transform coefficients to restore the residual signal. The adder 110 is a means that adds the restored residual signal to the prediction signal from the prediction signal generator 103 to thereby restore (or reproduce) the signal of the target block. The adder 110 outputs the restored signal of the target block to the filtering processor 113. The present embodiment employs the transformer 106 and the inverse transformer 109, but the present invention may employ other transformation processing which may replace the transformer processing. Furthermore, the transformer 106 and the inverse transformer 109 may be omitted.

The filtering processor 113 is a means that performs filtering on a reproduced picture having signals of a restored target block and stores the reproduced picture resulting from the filtering in the frame memory 104. In the present embodiment, the filtering processor 113 operates as a nonlinear filter. As shown in Fig. 2, the filtering processor 113 comprises a strength determination unit 301, a distortion removing processor 302, and mask processor 303.

The strength determination unit 301 is a means that determines a mode for determining the strength of filtering effect used to remove distortions along a boundary between two neighboring target blocks. In the present embodiment, the filtering strength is a value of a threshold T described below. The mode is determined for each block boundary and can also be called simply "a distortion removing mode."

Two adjacent target blocks arranged right and left or one over the other as shown in Fig. 3 will be called below as a block A and a block B. As discussed below, the strength determination unit 301 stores a plurality of modes which are defined based on encoding methods of blocks A, B (intra-frame prediction coding or inter-frame prediction coding) and particulars for encoding (presence or absence of nonzero transform coefficients, a value of motion vector difference, and values of differences of IC parameters (weight and offset)). The information regarding the encoding methods and the particulars for encoding herein is fed from the prediction signal generator 103 or from the quantizer 107 to the strength determination unit 301. The nonzero transform coefficients will be referred to hereinafter simply as nonzero coefficients.

INTRA_QUANT (where the block A or B is a block encoded by intra-frame prediction)

PRED_SIGINF (where both of the blocks A and B are encoded by inter-frame prediction and where a sum of the numbers of nonzero coefficients in the two blocks is equal to or larger than a first predetermined value C)

PRED_MOT (where both of the blocks A and B are encoded by inter-frame prediction, and a sum of the numbers of nonzero coefficients in the two blocks is less than the first predetermined value C, and a difference between horizontal or vertical motion information between the two blocks is equal to or larger than a second predetermined value D)

PRED_QUANT (where both of the blocks A and B are encoded by inter-frame prediction, a sum of the numbers of nonzero coefficients in the two blocks is less than the first predetermined value C, and a difference between the absolute values of horizontal or vertical motion vectors of the two blocks is less than the second predetermined value D)

IC_STRONG (where both of the blocks A and B are encoded by inter-frame prediction, neither of the blocks includes nonzero coefficients, the two types of IC parameters are both different between the two blocks, and a difference between the absolute values of horizontal or vertical motion vectors of the two blocks is equal to or larger than the second predetermined value D)

IC_INTERMED (where both of the blocks A and B are encoded by inter-frame prediction, neither of the blocks includes nonzero coefficients, the two types of IC parameters are both different between the two blocks, and a difference between the absolute values of horizontal or vertical motion vectors of the two blocks is less than the second predetermined value D)

IC_WEAK (where both of the blocks A and B are encoded by inter-frame prediction, neither of the blocks includes nonzero coefficients, only one of the two types of IC parameters is different between the two blocks, and a difference between the absolute values of horizontal or vertical motion vectors of the two blocks is equal to or larger than the second predetermined value D)

MOT_DISC (where both of the blocks A and B are encoded by inter-frame prediction, neither of the blocks includes nonzero coefficients, the two types of IC parameters are both identical between the two blocks, and a difference between the absolute values of horizontal or vertical motion vectors is equal to or larger than the second predetermined value D)

SKIP (where both of the blocks A and B are encoded by inter-frame prediction, neither of the blocks includes nonzero coefficients, the two types of IC parameters are both identical between the two blocks, and a difference between the absolute values of horizontal or vertical motion vectors is less than the second predetermined value D, or where both of the blocks A and B are encoded by inter-frame prediction, neither of the blocks includes nonzero coefficients, only one of the two types of IC parameters is different between the two blocks, and a difference between the absolute values of horizontal or vertical motion vectors of the two blocks is less than the second predetermined value D)

In the present embodiment, the first predetermined value C is 64, and the second predetermined value D is 4.

A mode determination process performed by the strength determination unit 301 will be described below in detail using the flowchart of Fig. 4. First, the strength determination unit 301 sets SKIP as an initial mode for the blocks A and B (step S01). Subsequently, the strength determination unit 301 determines whether either of the blocks A and B is a block generated by intra-frame prediction (intra block) (step S02). When either of the blocks is an intra block, the strength determination unit 301 changes the mode to INTRA_QUANT (step S03).

On the other hand, if both of the blocks A and B are blocks generated by inter-frame prediction (inter blocks), the strength determination unit 301 determines whether the block A or B contains nonzero coefficients (step S04). If there are nonzero coefficients, the strength determination unit 301 determines the number of nonzero coefficients (step S05). When it is determined in step S05 that a sum of the numbers of nonzero coefficients in the blocks A and B is equal to or larger than the first predetermined value C, the strength determination unit 301 sets the mode to PRED_SIGINF (step S06). On the other hand, when the sum is less than the first predetermined value C, the strength determination unit 301 further determines whether a difference between the absolute values of horizontal or vertical motion vectors of the blocks A and B is equal to or larger than the second predetermined value D (step S07).

When it is determined in step S07 that the difference between the absolute values of horizontal or vertical motion vectors is equal to or larger than the second predetermined value D, the strength determination unit 301 sets the mode to PRED_MOT (step S08); otherwise, it sets the mode to PRED_QUANT (step S09).

If it is determined in step S04 that neither of the blocks A and B contains nonzero coefficients, the strength determination unit 301 determines whether there is a difference in the IC parameters between the blocks A and B (step S10). In the present embodiment, the IC parameters comprise the weight and the offset used in formula (1) above.

If it is determined in step S10 that there is a difference in the IC parameters, the strength determination unit 301 further determines whether the weight and the offset are both different between the blocks A and B (step S11) and further determines whether the difference between the absolute values of horizontal or vertical motion vectors of the blocks A and B is equal to or greater than the second predetermined value D (steps S12, S15).

If the weight and the offset are both different between the blocks A and B and if the difference between the absolute values of motion vectors is equal to or greater than the second predetermined value D, the strength determination unit 301 sets the mode to IC_STRONG (step S13). If the weight and the offset are both different between the blocks A and B and if the difference between the absolute values of motion vectors is less than the second predetermined value D, the strength determination unit 301 sets the mode to IC_INTERMED (step S14).

On the other hand, if only one of the weight and the offset is different between the blocks A and B and if the difference between the absolute values of horizontal or vertical motion vectors of blocks A and B is equal to or greater than the second predetermined value D, the strength determination unit 301 sets the mode to IC_WEAK (step S16).

If it is determined in step S10 that the two types of IC parameters are identical, the strength determination unit 301 determines whether the difference between the absolute values of horizontal or vertical motion vectors of the blocks A and B is equal to or larger than the second predetermined value D (step S17). If it is determined that the difference is equal to or larger than the second predetermined value D, the strength determination unit 301 sets the mode to MOT_DISC (step S18).

In the above embodiment, if only one of the weight and the offset is different between the blocks A and B and if the difference between the absolute values of horizontal or vertical motion vectors of the blocks A and B is equal to or larger than the second predetermined value D, the strength determination unit 301 sets the mode to IC_WEAK. However, the condition for setting IC_WEAK is not limited to the above embodiment. Specifically, the strength determination unit 301 may set the mode to IC_WEAK if only one of the weight and offset is different between the blocks A and B without determining the value of the difference between the absolute values of horizontal or vertical motion vectors of the blocks A and B.

The strength determination unit 301 outputs information of the mode as determined above to the distortion removing processor 302 and the mask processor 303.

Modifications may be made to the strength determination unit 301 which will be described below. First, in the above embodiment, the first predetermined value C was 64, and the second predetermined value D was 4, but the values of C and D are not limited thereto.

The first predetermined value C may take, for example, the mean value of the numbers of nonzero coefficients or the value of the coefficient most frequently appearing in previously predicted pictures. Alternatively, an arbitrary value inputted from outside the encoder 1 may be set to the first predetermined value C. When the value from the outside is used, the encoding device 1 will encode the value and transmit the encoded data to the decoder 2.

The second predetermined value D may take, for example, the mean value of motion vectors or the value of the motion vector most frequently appearing in previously predicted pictures. The value of the second predetermined value D may change depending upon a fractional accuracy (a half pixel accuracy, a quarter pixel accuracy, a 1/8 pixel accuracy, a 1/16 pixel accuracy, etc.) for searching a motion vector. Alternatively, the second predetermined value D may take an arbitrary value inputted from outside the encoder 1. When the value from the outside is used, the encoder 1 will encode the value and transmit the encoded data to the decoder 2. In the embodiment discussed above, the second predetermined value D is constant in steps S07, S12, S15, and S17. However, different values D may be used in these steps.

In the embodiment discussed above, determinations are made based on the difference between the absolute values of horizontal or vertical motion vectors of the blocks A and B. However, the condition for the determination based on the motion vectors is not limited to the above embodiment. For example, the determination may be made based on a difference between the absolute values of motion vectors of target blocks calculated from both vertical and horizontal motion vectors. When one of the blocks A and B is generated by bidirectional prediction, the determination may be made after a motion vector absent in the other of the blocks, which is generated by unidirectional prediction, is set to 0.

The flow of the processes performed by the strength determination unit 301 is not limited to the flow shown in Fig. 4. For example, the determination processes may be performed in different orders.

In the embodiment discussed above, the strength determination unit 301 determines the mode for a boundary between target blocks. However, when a target block is further divided into small regions of different sizes, the strength determination unit 301 may determine the mode for respective boundaries of the small regions. The modes so determined are not limited to the modes discussed above but may include new modes.

Returning to Fig. 2, the distortion removing processor 302 is a means that removes distortions in a reproduced picture. As shown in Fig. 5, the distortion removing processor 302 comprises a linear transformer 302a, a distortion remover 302b, an inverse linear transformer 302c, and a distortion-removal-completed picture generator 302d.

The linear transformer 302a is a means that performs linear transformation (orthogonal transformation) on a reproduced picture y from the adder 110. It is assumed herein that the size of the reproduced picture y is N×L. It is, however, noted that N and L are arbitrary positive numbers and may be N=L. In order to perform linear transformation, the linear transformer 302a stores inside an nxn matrix of orthogonal transform $H_j$ (where j represents a target block number). The linear transformer 302a acquires M number of orthogonal transform coefficients $d_{1:M}=H_j y$ by applying orthogonal transformation on the reproduced picture y at M times while shifting, one pixel at a time, the base pixel point located at at the upper left corner. Here, the number M represents the number of pixels included in the reproduced picture y. The linear transformer 302a applies an nxn matrix of DCT (where n is an integer equal to or larger than 2) as the orthogonal transform $H_j$. The linear transformer 302a outputs the orthogonal transform coefficients $d_{1:M}$ to the distortion remover 302b. It is assumed in the present embodiment that the value n represents the size of one side of the target block.

Some modifications may be made to the linear transformer 302a which will be described below. First, although the embodiment discussed above uses the orthogonal transform matrix of a size equal to the size of the target block, it is also possible to an orthogonal transform matrix whose a size is larger or smaller than size of the target block. The embodiment discussed above uses a nxn DCT to perform orthogonal transformation. However, the type of orthogonal transformation is not limited thereto. It is also possible to use, for example, the Hadamard transform, the integer transform, and the like. It is also possible to perform orthogonal transformation using a one-dimensional transform matrix, instead of a two-dimensional transform matrix. It is also possible to perform orthogonal transformation using an mxn matrix (where m and n are integers equal to or larger than 1, and m≠n).

Further, the embodiment discussed above applies orthogonal transformation. However, the type of linear transformation is not limited thereto. It is possible to apply a non-orthogonal transformation, or apply a non-block transformation to perform transformation without defining a block boundary.

In the embodiment discussed above, the orthogonal transformation process was repeatedly applied. However, the linear transformer 302a may be modified to perform the process only once.

The distortion remover 302b is a means that determines whether the orthogonal transform coefficients $d_{1:M}$ of the picture signal are to be used as they are or to be replaced with predetermined values to thereby generate prediction transform coefficients and then performs an inverse orthogonal transformation on the prediction transform coefficients to remove quantization distortions in the picture signal. In the present embodiment, the predetermined values for replacement may be 0.

The distortion remover 302b is a means that determines, based on the mode information for each block boundary inputted from the strength determination unit 301, a threshold (a filtering strength) used to remove distortions. In the present embodiment, the distortion remover 302b sets the value of a master threshold $T_{master}$, based on the quantization step size, and determines the final value of threshold T according to the inputted mode and a pixel signal (representing luminance or chrominance) from which distortions are removed. More specifically, the distortion remover 302b determines the value of the threshold T by multiplying the value of the master threshold $T_{master}$ with a value set in a ratio table. The distortion remover 302b stores the values in the ratio table. The present embodiment employs the ratio table as shown below:

[Table 1]

| Mode | SKIP | INTRA_QUANT | PRED_SIGNIF | PRED_QUANT | PRED_MOT | MOT_DISC | IC_STRONG | IC_INTERMED | IC_WEAK |
|---|---|---|---|---|---|---|---|---|---|
| Luminance | 0 | 0.36 | 0.32 | 0.18 | 0.32 | 0.16 | 0.22 | 0.18 | 0.06 |
| Chrominance | 0 | 0.30 | 0.16 | 0.14 | 0.16 | 0.08 | 0.16 | 0.14 | 0.04 |

For example, when PRED_SIGINF is selected, the value of threshold T for a luminance signal is T = 0.32 × $T_{master}$ and the value of threshold T for a chrominance signal is T = 0.16 × $T_{master}$.

It is preferable that the ratios defined in the above ratio table are empirically set so as to objectively or subjectively improve the quality of pictures. Furthermore, it is preferable that the ratios for the SKIP mode are 0 for both luminance and chrominance. It is also preferable that the ratios are different for luminance and chrominance in the modes other than SKIP.

The values of the ratios for the three modes, IC_STRONG, IC_INTERMED, and IC_WEAK, which are selected based on the IC parameters, are not limited to those shown in the above ratio table. However, it is preferable that the values of the ratios for these modes satisfy the relationship of IC_STRONG > IC_INTERMED > IC_WEAK. Namely, it is preferable that the threshold corresponding to IC_STRONG (a first filtering strength) is larger than the threshold corresponding to IC_INTERMED (a second filtering strength) and that the threshold corresponding to IC_INTERMED is larger than the threshold corresponding to IC_WEAK (a third filtering strength).

It is also preferable that the ratios for IC_STRONG, IC_INTERMED, and IC_WEAK are smaller than at the ratio for least INTRA_QUANT. Namely, it is preferable that the thresholds corresponding to IC_STRONG, IC_INTERMED, and IC_WEAK are each smaller than a threshold which is set when at least one of adjacent target blocks is encoded by intra-frame prediction.

The distortion remover 302b selects a distortion removing mode, based on a relationship between the block represented by the orthogonal transform matrix (orthogonal transform coefficient block) and a target block and on whether the orthogonal transform coefficient block ranges over a plurality of target blocks. The orthogonal transform coefficient block thus defines a range where a single distortion removing process is performed, i.e., a unit of an area where a distortion removal is performed. The process of selecting a distortion removing mode will be described using Figs. 6 and 7.

Fig. 6 may be used to explain the process performed when the size of the orthogonal transform coefficient block is equal to or smaller than the size of a target block. As shown in Fig. 6 (a), when the orthogonal transform coefficient block Ly ranges over a plurality of target blocks La and Lb, it is preferable that the distortion remover 302b selects a mode with the weakest level of distortion removal (mode with the smallest threshold), i.e., a mode with the smallest ratios in the above ratio table among the distortion removing modes selected for the respective boundaries of a vertical block boundary Ba and horizontal boundaries Bb, Bc. Here, the boundary Bb is a boundary being in contact with the target block Lb and the boundary Bc a boundary being in contact with the target block La.

On the other hand, in the case as shown in Fig. 6(b) where the orthogonal transform coefficient block Ly is co-extensive exactly with the target block Lb or there is no block boundary crossed by the orthogonal transform coefficient block Ly, the distortion remover 302b selects one from two distortion removing modes corresponding to the boundary at the left edge Ba of the target block Lb and the boundary at the upper edge Bb thereof whose threshold is larger, i.e., a distortion removing mode selected between the two which has higher ratios in the above ratio table. It should, however, be noted that in the case as shown in Fig. 6 (b), a mode may be selected in other ways. For example, the distortion remover 302b may select a distortion removing mode whose threshold is smaller between the two distortion removing modes corresponding to the boundaries Ba and Bb in Fig. 6 (b). Furthermore, the distortion remover 302b may select one mode from two distortion removing modes corresponding to the right edge and the lower edge of the target block.

Next, with reference to Fig. 7, the process will be explained which is performed when the orthogonal transform coefficient block is larger than a target block (e.g., the size of a target block is $B \times B$, while the size of the orthogonal transform coefficient block is 2Bx2B). In this case, the distortion remover 302b selects a mode whose threshold is smallest among modes corresponding to a plurality of boundaries (horizontal boundaries Ha-Hf and vertical boundaries Va-Vf in the example shown in Fig. 7) present within the orthogonal transform coefficient block Lz. It should, however, be noted that in the case as shown in Fig. 7, a mode may be selected in other ways. For example, the distortion remover 302b may select, among a plurality of modes, a mode that has been selected most often in the past or a mode which has a threshold close to an average threshold.

Using the threshold T determined according to a mode selected as described above, the distortion remover 302b determines for each of the orthogonal transform coefficients $d_{1:M}$ whether the coefficient is larger than the threshold T. If it is determined that the i-th orthogonal transform coefficient $d_{1:M}(i)$ is smaller than the threshold T, the distortion remover 302b then sets a predetermined value "0" to the coefficient $d_{1:M}(i)$. Otherwise, it keeps the coefficient $d_{1:M}(i)$ unchanged. The distortion remover 302b performs this process on all of the orthogonal transform coefficients $d_{1:M}$ to acquire M numbers of orthogonal transform coefficients $c_{1:M}$ after distortions are removed, and outputs the coefficients $c_{1:M}$ to the inverse linear transformer 302c.

Some modifications may be made to the distortion remover 302b which will be described below. In the embodiment discussed above, the distortion remover 302b determines the final threshold T by multiplying the master threshold $T_{master}$ by the values in the ratio table. However, the distortion remover 302b may have thresholds T in advance which correspond to quantization step sizes.

In the embodiment discussed above, although the master threshold $T_{master}$ is determined based on a quantization step size, the master threshold may be determined in other ways. For example, the master threshold $T_{master}$ may be determined using another encoding parameter, information obtained when the orthogonal transformation is applied and the distortion removing process is performed, or the like. It is also possible to use a value as the master threshold $T_{master}$ which is imputed from outside the encoder 1. When a value from the outside is used, the encoder 1 encodes the value and transmits the encoded data to the decoder 2, and the decoder 2 reproduces the master threshold $T_{master}$ and uses it.

In the embodiment discussed above, some of the orthogonal transform coefficients $d_{1:M}$ which meet a given condition are replaced with a predetermined value "0". However, the coefficients may take other values. For example, the distortion remover 302b may divide in half the orthogonal transform coefficients $d_{1:M}$ to derive the distortion-removal-completed orthogonal transform coefficients $c_{1:M}$ or may replace the orthogonal transform coefficients with a predetermined value other than "0." The distortion remover 302b may replace the orthogonal transform coefficients $d_{1:M}$ differently according to their positions.

The inverse linear transformer 302c is a means that applies an inverse of linear transform $H_j$ to perform an

inverse orthogonal transformation on the distortion-removal-completed orthogonal transform coefficients $c_{1:M}$ and thereby derives a distortion-removal-completed block as shown below and outputs the block to the distortion-removal-completed picture generator 302d:

$$\hat{x}_{1:M} = H_j^{-1} c_{1:M}$$

(which will be represented hereinafter by $^\wedge x_{1:M}$).

The distortion-removal-completed picture generator 302d is a means that combines inputted distortion-removal-completed blocks $^\wedge x_{1:M}$ to generate a picture from which distortion has been removed (a distortion-removal-completed picture) as shown below:

$$\hat{X}$$

(which will be represented hereinafter by $^\wedge X$). Specifically, the distortion-removal-completed picture generator 302d generates the distortion-removal-completed picture $^\wedge X$ by averaging (arithmetic average) the distortion-removal-completed blocks $^\wedge x_{1:M}$. The distortion-removal-completed picture generator 302d outputs the distortion-removal-completed picture $^\wedge X$ thus generated to the mask processor 303.

Some modifications may be made to the distortion-removal-completed picture generator 302d which will be described below. The embodiment discussed above uses arithmetic averaging, but the distortion-removal-completed picture may be generated in other ways. For example, the distortion-removal-completed picture generator 302d may generate the distortion-removal-completed picture by calculating weighted averages. For this purpose, the generator may use weighting factors determined based on information acquired during each linear transformation process, e.g., weighting factors determined according to the number of orthogonal transform coefficients replaced with a predetermined value, using the threshold T.

In the embodiment discussed above, the distortion-removal-completed picture generator 302d processes the orthogonal transform coefficient obtained from respective pixels of the reproduced picture signal, but the orthogonal transform coefficients may be processed in different ways. For example, the distortion-removal-completed picture generator 302d may process the orthogonal transform coefficients obtained from respective columns or respective rows of the reproduced picture, or may process the coefficients obtained from respective pixels extracted in a checkered pattern from the reproduced signal. When deriving the orthogonal transform coefficients, the distortion-removal-completed picture generator 302d may choose pixels from different positions, each time a new reproduced picture is inputted in the filtering processor 113.

In the embodiment discussed above, the distortion-removal-completed picture generator 302d performs the distortion removing process as described above only once, but distortions may be removed by repeating the process multiple times. The number of repeating times may be set in advance or may be changed each time according to information relating to encoding (e.g., the quantization parameter). It is also possible to use a number inputted from outside the encoder 1. When the number inputted from the outside is used, the encoder 1 may encode the number and transmit the encoded data to the decoder 2.

Some modifications may be made to the distortion removing processor 302 which will be described below. The distortion removing processor 302 may remove distortions with a method other than described above. For example, the distortion removing processor 302 may use a deblocking filter used in H.264. In this case, the block boundary strength thereof may be determined according to the mode. The distortion removing processor 302 may directly determine a type of the filter and the number of pixels to be filtered according to the mode.

Returning to Fig. 2, the mask processor 303 determines a mask function, based on the mode information from the strength determination unit 301 and performs a masking process using the mask function. Specifically, as pixels set according to the mask function, the mask processor 303 uses pixels of the reproduced picture y directly inputted from the adder 110 or pixels of the distortion-removal-completed picture $^\wedge X$ inputted from the distortion removing processor 302.

First, the mask processor 303 determines a mask function for each target block, based on the inputted mode. The mask function herein is a pixel region in a predetermined range defined around a boundary of a target block, and in this region, the pixels of the reproduced picture y are replaced with pixels of the distortion-removal-completed picture $^\wedge X$. Namely, the mask function is a target region to be filtered. In the present embodiment, the mask processor 303 stores a mask table shown below and determines a mask function in accordance with this table.

[Table 2]

| Mode | SKIP | INTRA_ QUANT | PRED_S IGNIF | PRED_ QUANT | PRED _MOT | MOT_ DISC | IC_ST RONG | IC_ INTE RMED | IC_W EAK |
|---|---|---|---|---|---|---|---|---|---|
| Luminance | 0 | 2 | 2 | 1 | 2 | 1 | 2 | 1 | 1 |
| Chrominance | 0 | 2 | 2 | 1 | 2 | 1 | 2 | 1 | 1 |

The value "0" in the above mask table means no replacement with the distortion-removal-completed picture. The value "1" means a mask function Ma covering a one-pixel area around a boundary B between target blocks Lp and Lq, as shown in Fig. 8 (a). The value "2" means a mask function Mb covering a two-pixel area around the boundary B between the target blocks Lp and Lq, as shown in Fig 8 (b).

Some modifications may be made to the mask processor 303 which will be described below. The mask processor 303 may determine the mask function with other methods different from the method using the above mask table. The mask processor 303 may use other mask functions different from those shown in Fig. 8 or may use one type of mask function or three or more types of mask functions. For example, the mask processor 303 may use a mask function for replacing the entire reproduced picture y with the distortion-removal-completed picture ^X.

In the embodiment discussed above, although a single mask function is defined for both luminance and chrominance in each mode, it is also possible to define different mask functions for luminance and chrominance in each mode.

The mask processor 303 uses a mask function selected according to a mode and replaces the pixels in the region of the reproduced picture y corresponding to the function with the pixels of the distortion-removal-completed picture ^X. The mask processor 303 then stores into the frame memory 104 the reproduced picture mask-process as described above as a distortion-removal-completed picture represented by the following:

$$\hat{X}_{final}$$

(which will be represented hereinafter by ^X$_{final}$).

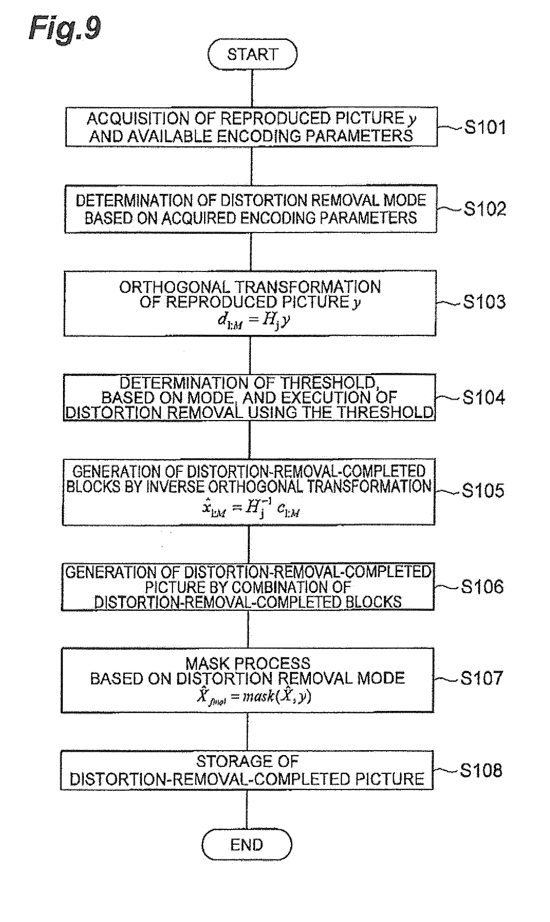

An explanation will be made as follows, using Fig. 9, regarding the operation of the filtering processor 113 and the video prediction encoding method according to the present embodiment, particularly the filtering step. Fig. 9 is a flowchart showing the operation of the filtering processor 113.

First, the filtering processor 113 acquires a reproduced picture y from the adder 110 and acquires encoding parameters to be used from the prediction signal generator 103 and the quantizer 107 (step S101). Examples of the encoding parameters to be used include the quantization parameter, the motion information (motion vector and reference index), the mode information, the information indicative of the block division method, the IC parameters concerning the luminance compensated prediction, and the like.

Subsequently, the strength determination unit 301 determines a distortion removing mode applied at a boundary between target blocks, based on the encoding parameters (step S102).

Next, the distortion removing processor 302 performs its process. First, the linear transformer 302a applies the linear transformation H$_j$ to the reproduced picture y to derive the orthogonal transform coefficients d$_{1:M}$ (step S103). Here, the linear transformer 302a uses an nxn DCT (n is an integer equal to or larger than 2) as the orthogonal transformation H$_j$. The distortion remover 302b then determines a threshold T, based on the mode inputted from the strength determination unit 301 and performs the distortion removing process with the threshold T for each of the orthogonal transform coefficients d$_{1:M}$ to obtain distortion-removal-completed orthogonal transform coefficients c$_{1:M}$ (step S104). Subsequently, the inverse linear transformer 302c performs the inverse linear transformation on the distortion-removal-completed orthogonal transform coefficients c$_{1:M}$ to generate the distortion-removal-completed blocks ^x$_{1:M}$ (step S105). Thereafter, the distortion-removal-completed picture generator 302d combines the distortion-removal-completed blocks ^x$_{1:M}$ to generate the distortion-removal-completed picture ^X (step S106).

Subsequently, the mask processor 303 determines a mask function, based on the mode inputted from the strength determination unit 301 and performs the masking process on the reproduced picture y and the distortion-removal-completed picture ^X, using the mask function (step S107). The mask processor 303 then stores the distortion-removal-completed picture ^X$_{final}$ in the frame memory 104 (step S108, storage step).

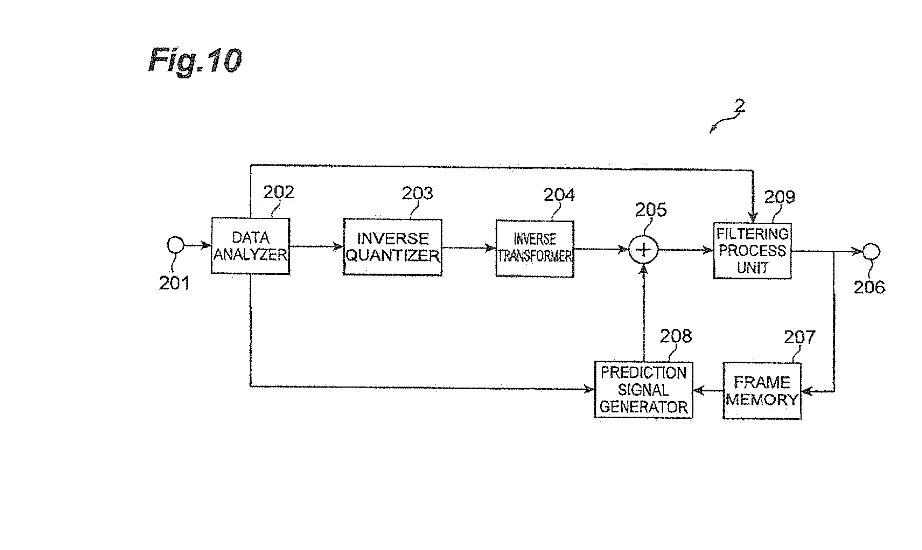

The functions and configuration of a video prediction decoder according to an embodiment of the present invention will be described, using Fig. 10. Fig. 10 is a block diagram showing the functional configuration of the video prediction decoder 2 (hereinafter referred to as simply a decoder 2 in the present specification) according to an embodiment of the present invention. The decoder 2 comprises, as functional components, an input terminal (input means) 201, a data analyzer 202, an inverse quantizer 203, an inverse transformer 204, an adder 205, an output terminal 206, a frame memory (storage means) 207, a prediction signal generator 208, and a filtering processor (filtering means) 209. The inverse quantizer 203, the inverse transformer 204, and the adder 205 constitute restoration means for executing a restoration step. Another transform process may be used instead of the inverse transformer 204. The inverse transformer 204 may be omitted.

The input terminal 201 is a means that receives compressed data from the encoder 1 and outputs the compressed data to the data analyzer 202. Namely, the input terminal 201 executes an input step. The compressed data contains quantized transform coefficients representing a residual signal, information relating to generation of prediction signal, and so on. The information relating to generation of prediction signal includes, with respect to inter-frame prediction, information about block division (the size of block), motion information, a reference index, and IC parameters for luminance compensated prediction. With respect to intra-frame prediction, the information includes information about an extrapolation method for generating pixels of a target block from neighboring pixels which have been reproduced.

The data analyzer 202 is a means that analyzes the compressed data and performs an entropy decoding process to extract quantized transform coefficients and the information relating to generation of prediction signal. The data analyzer 202 outputs the extracted information to the inverse quantizer 203, the prediction signal generator 208, and the filtering processor 209.

The inverse quantizer 203 is a means that performs inverse quantization on the quantized transform coefficients to generate transform coefficients and outputs the generated transform coefficients to the inverse transformer 204. The inverse transformer 204 is a means that performs inverse discrete cosine transform on the inputted transform coefficients to reproduce a residual signal and outputs the residual signal to the adder 205.

The prediction signal generator 208 is a means that generates a prediction signal for a target block. In response to the information inputted from the data analyzer 202 relating to generation of the prediction signal, the prediction signal generator 208 accesses the frame memory 207 and retrieves a plurality of reference pictures. The prediction signal generator 208 then generates a prediction signal, based on reference signals forming the reference pictures and the inputted information. Since the process of generating the prediction signal is the same as performed by the prediction signal generator 103 in the encoder 1, a detailed description thereof is omitted. The prediction signal generator 208 outputs the generated prediction signal to the adder 205.

The adder 205 is a means that adds the residual signal from the inverse transformer 204 and the prediction signal from the prediction signal generator 208 to reproduce a signal of the target block. The adder 205 outputs the generated signal to the filtering processor 209.

The filtering processor 209 is a means that performs filtering on the reproduced picture and outputs the filtered reproduced picture to the output terminal 206 and the frame memory 207. The filtering processor 209 performs the filtering, based on the signal of the reproduced picture from the adder 205 and on the information relating to the encoding method and particulars for encoding (e.g., IC parameters for luminance compensation prediction) inputted from the data analyzer 202. The configuration and function of the filtering processor 209 and the processes performed thereby are the same as those of the filtering processor 113 of the encoding device 1, and therefore a detailed description thereof is omitted. The filtering processor 209 outputs a distortion-removal-completed picture $^\wedge X_{final}$ thus generated to the output terminal 206 and stores the picture $^\wedge X_{final}$ in the frame memory 207. Namely, the filtering processor 209 performs a filtering step and a storing step.

The output terminal 206 is a means that outputs the distortion-removal-completed picture $^\wedge X_{final}$ to the outside. For example, the output terminal 206 outputs the picture $^\wedge X_{final}$ to a display device (not shown).

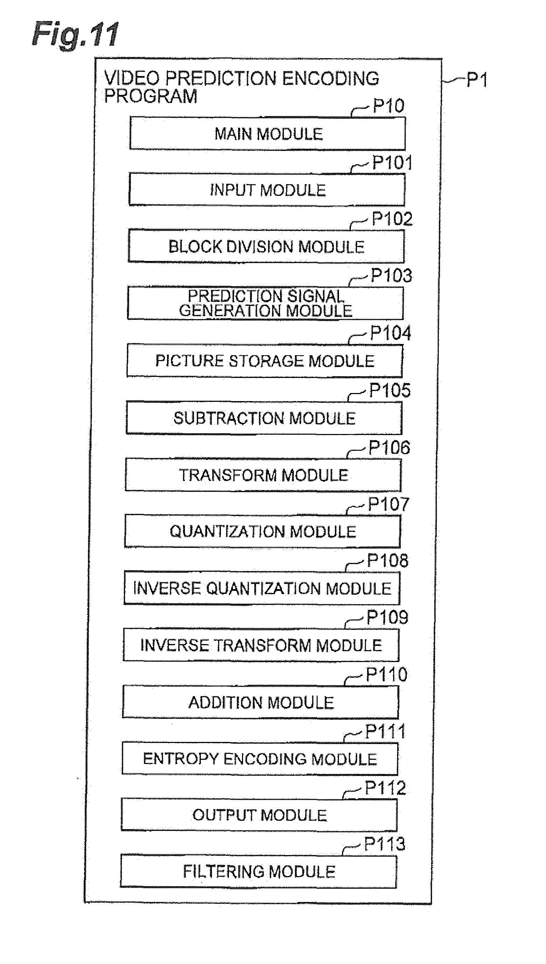

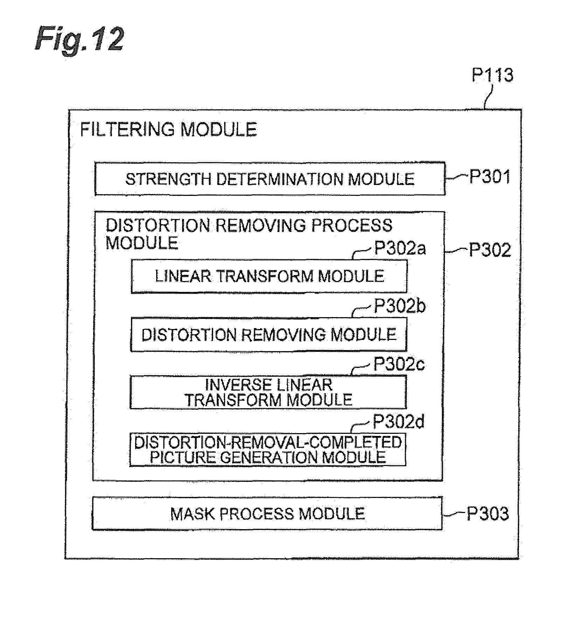

An explanation will be made using Figs. 11 and 12 regarding a video prediction encoding program executed by a computer to realize the aforementioned encoding device 1. Fig. 11 is a drawing showing a configuration of video prediction encoding program P1 (hereinafter referred to as simply an encoding program P1). Fig. 12 is a drawing showing a detailed configuration of a filtering transform module P113.

As shown in Fig. 11, the encoding program P1 includes a main module P10, an input module P101, a block division module P102, a prediction signal generation module P103, a picture storage module P104, a subtraction module P105, a transform module P106, a quantization module P107, an inverse quantization module P108, an inverse transform module P109, an addition module P110, an entropy encoding module P111, an output module P112, and a filtering module P113.

Among these, the filtering module P113 includes, as shown in Fig. 12, a strength determination module P301, a distortion removing process module P302, and a mask process module P303. The distortion removing process module includes a linear transform module P302a, a distortion removing module P302b, an inverse linear transform module P302c, and a distortion-removal-completed picture generation module P302d.

The main module P10 functions to perform overall control of the entire video prediction encoding processes. A computer executes the input module P101, the block division module P102, the prediction signal generation module P103, the picture storage module P104, the subtraction module P105, the transform module P106, the quantization module P107, the inverse quantization module P108, the inverse transform module P109, the addition module P110, the entropy encoding module P111, the output module P112, and the filtering module P113 to implement the functions of the input terminal 101, the block divider 102, the prediction signal generator 103, the frame memory 104, the subtracter 105, the transformer 106, the quantizer 107, the inverse quantizer 108, the inverse transformer 109, the adder 110, the entropy encoder 111, the output terminal 112, and the filtering processor 113.

The respective modules constituting the filtering module P113 implement the functions of the strength determination unit 301, the distortion removing processor 302 (the linear transformer 302a, the distortion remover 302b, the inverse linear transformer 302c, and the distortion-removal-completed picture generator 302d), and the mask processor 303, respectively.

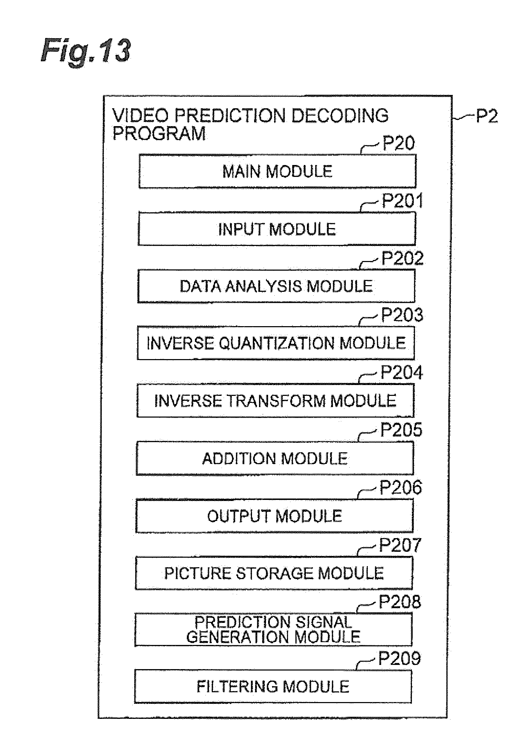

An explanation will be made using Fig. 13 regarding a video prediction decoding program executed by a computer to implement the functions of the aforementioned decoder 2. Fig. 13 is a drawing showing a configuration of video prediction decoding program P2 (hereinafter referred to as simply a decoding program P2).

As shown in Fig. 13, the decoding program P2 includes a main module P20, an input module P201, a data analysis module P202, an inverse quantization module P203, an inverse transform module P204, an addition module P205, an output module P206, a picture storage module P207, a prediction signal generation module P208, and a filtering module P209. Since the configuration of the filtering module P209 is the same as the filtering module P113 shown in Fig. 12, a detailed description thereof is omitted.

The main module P20 functions to perform overall control of the entire video prediction decoding processes. A computer executes the input module P201, the data analysis module P202, the inverse quantization module P203, the inverse transform module P204, the addition module P205, the output module P206, the picture storage module P207, the prediction signal generation module P208, and the filtering module P209 to implement the functions of the input terminal 201, the data analyzer 202, the inverse quantizer 203, the inverse transformer 204, the adder 205, the output terminal 206, the frame memory 207, the prediction signal generator 208, and the filtering processor 209.

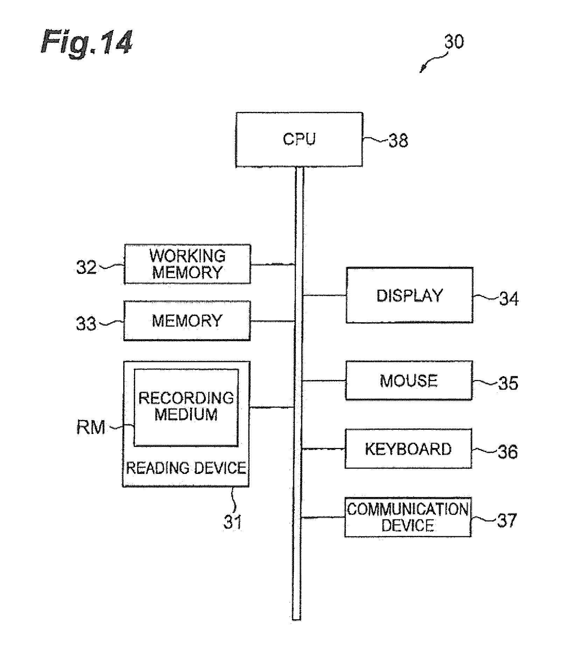

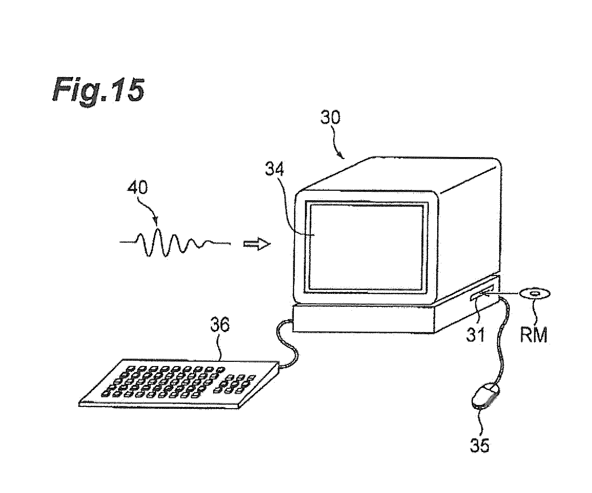

The encoding program P1 and the decoding program P2 configured as described above can be recorded on a recording medium RM as shown in Figs. 14 and 15 and are executed by a computer 30 shown in Fig. 14. It should, however, be noted that apparatus that execute these programs may include a DVD player, a set-top box, a cell phone, or the like.

As shown in Fig. 14, the computer 30 comprises a reading device 31 such as a flexible disk drive unit, a CD-ROM drive unit, or a DVD drive unit, a working memory (RAM) 32 in which an operating system resides, a memory 33 storing programs stored in the recording medium RM, a display 34, a mouse 35 and a keyboard 36 as input devices, a communication device 37 that transmits and receives data or the like, and a CPU 38 that controls execution of the programs.

When the recording medium RM is inserted in the reading device 31, the computer 30 becomes able to access the encoding program P1 stored in the recording medium RM which enables the computer 30 to function as the encoder 1 according to the present invention. When the recording medium RM is inserted in the reading device 31, the computer 30 likewise becomes able to access the decoding program P2 stored in the recording medium RM, which enables the computer 30 to function as the decoder 2 according to the present invention.

As shown in Fig. 15, the encoding program P1 or the decoding program P2 may take a form of carrier waive propagating data signal 40 through a network. In this case, the computer 30 can execute the encoding program P1 or the decoding program P2 received by the communication device 37 after storing the received program in the memory 33.

In the embodiment described above, after the threshold T, which represents a type of filtering strength, and the mask function, which represents a filtering target region, are determined based on the parameters (a weight and an offset (IC parameters))for luminance compensation prediction performed between target blocks, filtering is performed on a reproduced picture. Then, the filtered reproduced picture is stored as a reference picture to be used to encode subsequent pictures in the encoder 1 or as a reference picture to be used to restore subsequent pictures in the decoder 2. Since the parameters for luminance compensated prediction are used in the filtering, even if there is a difference in luminance compensation prediction between blocks, the filtering can be performed according to the difference. As a result, it becomes possible to suppress occurrence of problems including, for example, excessive filtering and insufficient filtering strength to thereby improve the quality of reproduced pictures and improve the prediction efficiency of pictures using reproduced pictures as reference pictures.

Since the embodiment discussed above determines a filtering strength (a threshold T) and a filtering target region (a mask function), based on a difference of the parameters between adjacent blocks, it becomes possible to suppress block distortions likely to occur in a block boundary region. As a result, it becomes possible to improve the quality of reproduced pictures and the efficiency of predicting pictures.

In the video prediction encoding device according to the embodiment discussed above, the filtering means may determine the filtering strength and filtering target region, based on a determination as to whether the parameters are different between adjacent blocks.

In the video prediction encoder according to the embodiment discussed above, the parameters for luminance compensation prediction may include at least a first parameter and a second parameter, and the filtering means may compares the first and second parameters between adjacent blocks and when the first and second parameters both are different between the blocks, the filtering strength is set larger than a strength set when the first and second parameters are otherwise.

The video prediction encoder according to the embodiment discussed above, the filtering means may compare the first and second parameters between adjacent blocks and compare motion vectors between the blocks. The filtering means may employ a first filtering strength if the first and second parameters are both different between the blocks and the difference of the motion vectors difference is equal to or larger than a predetermined value. The filtering means may employ a second filtering strength if the first and second parameters are both different between the blocks and difference of the motion vectors is less than the predetermined value. The filtering means may employ a third filtering strength if only one of the first and second parameters is different between the blocks. The first filtering strength is larger than the second filtering strength, which is larger than the third filtering strength.

In the video prediction encoder according to the embodiment discussed above, all of the first, second, and third filtering strengths may be smaller than a filtering strength which is set if at least one of the adjacent blocks is encoded by intra-frame prediction.

In the video prediction encoder according to the embodiment discussed above, the first and second parameters may be a weight and an offset for changing pixel values of prediction signals of the blocks.

In the video prediction decoder according to the embodiment discussed above, the filtering means may determine whether the parameters are different between the adjacent blocks and determine a filtering strength and a target region to be filtered, based on a result of the determination.

In the video prediction decoder according to the embodiment discussed above, the parameters for luminance compensation prediction may include at least a first parameter and a second parameter. The filtering means may compare the first and second parameters between adjacent blocks. If the first and second parameters are both different between the blocks, the filtering means sets the filtering strength larger than a filtering strength which is set when the first and second parameters are otherwise.

In the video prediction decoder device according to the embodiment discussed above, the filtering means may compare the first and second parameters between adjacent blocks and may compare a difference of the motion vectors between the blocks. The filtering means may employ a first filtering strength if the first and second parameters are both different between the blocks and the difference between the motion vectors is equal to or larger than a predetermined value. The filtering means may employ a second filtering strength if the first and second parameters are both different between the blocks and difference between the motion vectors is less than the predetermined value. The filtering means may employ a third filtering strength if only one of the first and second parameters is different between the blocks. The first filtering strength is larger than the second filtering strength, which is larger than the third filtering strength.

In the video prediction decoder according to the embodiment discussed above, all of the first, second, and third filtering strengths are smaller than a filtering strength which is set if at least one of the adjacent blocks is encoded by intra-frame prediction.

In the video prediction decoder according to the embodiment discussed above, the first and second parameters may be a weight and an offset for changing pixel values of prediction signals of the blocks.

The embodiments of the present invention have been described above. It should, however, be noted that the present invention should be construed limited to the above embodiments. The present invention can be modified in many ways without departing from the scope and spirit of the invention.

In the above embodiments, two IC parameters representing a weight and an offset for luminance compensation prediction are used. However, these parameters are exemplary and other parameters may be used to determine a filtering strength and a target region to be filtered. For example, only one of the offset and the weight may be used. Three or more parameters for luminance compensation prediction may also be used. The filtering strength and the target region to be filtered may be determined based on other types of parameters.

In the embodiments discussed above, the luminance compensation prediction is performed on each block. However, the present invention is also applicable to the case where the same luminance compensation prediction is performed on the entire frame. In that case, a different luminance compensation prediction may be performed on respective frames.

The embodiments discussed above apply the luminance compensation prediction, but the present invention is also applicable to the case where a similar weighted compensation prediction is applied to chrominance.

The embodiments discussed above used a threshold T as a filtering strength, but the type of filtering strength determined by the filtering means is not limited thereto. The filtering means may use any reference values other than the threshold T as a filtering strength to perform the filtering as described above.

The embodiments discussed above used the filtering processors 113, 209 as in-loop filters, but the filtering processors may be used as post filters.

**List of Reference Signs**

1: video prediction encoder; 2: video prediction decoder; 101: input terminal; 102: block divider; 103: prediction signal generator; 104: frame memory; 105: subtracter; 106: transformer; 107: quantizer; 108: inverse quantizer; 109: inverse transformer; 110: adder; 111: entropy encoder; 112: output terminal; 113: filtering processor; 201: input terminal; 202: data analyzer; 203: inverse quantizer; 204: inverse transformer; 205: adder; 206: output terminal; 207: frame memory; 208: prediction signal generator; 209: filtering processor; 301: strength determination unit; 302: distortion removing processor; 302a: linear transformer; 302b: distortion remover; 302c: inverse linear transformer; 302d: distortion-removal-completed picture generator; 303: mask processor; P1: video prediction encoding program; P10: main module; P101: input module; P102: block division module; P103: prediction signal generation module; P104: picture storage module; P105: subtraction module; P106: transform module; P107: quantization module; P108: inverse quantization module; P109: inverse transform module; P110: addition module; P111: entropy encoding module; P112: output module; P113: filtering module; P2: video prediction decoding program; P20: main module; P201: input module; P202: data analysis module; P203: inverse quantization module; P204: inverse transform module; P205: addition module; P206: output module; P207: picture storage module; P208: prediction signal generation module; P209: filtering module; P301: strength determination module; P302: distortion removing process module; P302a: linear transform module; P302b: distortion removing module; P302c: inverse linear transform module; P302d: distortion-removal-completed picture generation module; P303: mask process module.

**Claims**

1. A video prediction encoding method executed by a video prediction encoder, comprising:

an input step of receiving a plurality of pictures constituting a video sequence;
an encoding step of encoding a picture inputted in the input step by at least one of intra-frame prediction and inter-frame prediction to generate compressed data, and encoding parameters for luminance compensation prediction between blocks obtained by dividing the picture;
a restoration step of decoding the compressed data generated in the encoding step to restore the picture as a reproduced picture;
a filtering step of determining a filtering strength and a target region to be filtered, using at least the parameters for luminance compensation prediction between blocks and performing filtering on the reproduced picture restored in the restoration step, according to the filtering strength and the target region to be filtered; and
a storage step of storing, in storage means of the video prediction encoder, the reproduced picture filtered in the filtering step as a reference picture to be used to encode subsequent pictures.

2. The video prediction encoding method according to claim 1, wherein the filtering step comprises determining whether the parameter is different between adjacent blocks and determining the filtering strength and the target region to be filtered, based on a result of the determination.

3. The video prediction encoding method according to claim 2, wherein the parameters for luminance compensation prediction include at least a first parameter and a second parameter, and
wherein the filtering step comprises comparing the first and second parameters between the adjacent blocks and if the first and second parameters are both different between the blocks, setting the filtering strength larger than a filtering strength which is set when the first and second parameters are otherwise.

4. The video prediction encoding method according to claim 3, wherein the filtering step comprises: comparing the first and second parameters between the adjacent blocks and comparing a difference of motion vectors between the blocks; setting a first filtering strength if the first and second parameters are both different between the blocks and the difference between the motion vectors is equal to or larger than a predetermined value; setting a second filtering strength if the first and second parameters are both different between the blocks and the difference between the motion vectors is less than the predetermined value; and setting a third filtering strength if only one of the first and second parameters is different between the blocks, and
wherein the first filtering strength is larger than the second filtering strength, which is larger than the third filtering strength.

5. The video prediction encoding method according to claim 4, wherein all of the first, second, and third filtering strengths are smaller than filtering strengths which are set if at least one of the adjacent blocks is encoded by the intra-frame prediction.

**6.** The video prediction encoding method according to any one of claims 3 to 5, wherein the first and second parameters are a weight and an offset, respectively, for changing pixel values of prediction signals of the blocks.

**7.** A video prediction decoding method executed by a video prediction decoder, comprising:

an input step of receiving first compressed data generated by encoding a plurality of pictures in a video sequence through at least one of intra-frame prediction and inter-frame prediction and second compressed data generated by encoding parameters for luminance compensation prediction between blocks obtained by dividing the pictures;

a restoration step of decoding the first and second compressed data received in the input step to restore the pictures as reproduced pictures and to restore the parameters for luminance compensation prediction between the blocks;

a filtering step of determining a filtering strength and a target region to be filtered, using at least the parameters for luminance compensation prediction between the blocks restored in the restoration step and performing filtering on the reproduced picture restored in the restoration step, according to the filtering strength and the target region to be filtered; and

a storage step of storing, in storage means of the video prediction decoder, the reproduced picture filtered in the filtering step, as a reference picture to be used for restoration of subsequent pictures.

**8.** The video prediction decoding method according to claim 7, wherein the filtering step comprises determining whether the parameters are different between the adjacent blocks and determining the filtering strength and the target region to be filtered, based on a result of the determination.

**9.** The video prediction decoding method according to claim 8, wherein the parameters for luminance compensation prediction include at least a first parameter and a second parameter, and
wherein the filtering step comprises comparing the first and second parameters between the adjacent blocks and if the first and second parameters are both different between the blocks, setting the filtering strength larger than a filtering strength which is set when the first and second parameters are otherwise.

**10.** The video prediction decoding method according to claim 9, wherein the filtering step comprises: comparing the first and second parameters between the adjacent blocks and comparing a difference of motion vectors between the blocks; setting a first filtering strength if the first and second parameters are different between the blocks and the difference between the motion vectors is equal to or larger than a predetermined value; setting a second filtering strength if the first and second parameters are both different between the blocks and the difference between the motion vectors is less than the predetermined value; and setting a third filtering strength if only one of the first and second parameters is different between the blocks, and
wherein the first filtering strength is larger than the second filtering strength, which is larger than the third filtering strength.

**11.** The video prediction decoding method according to claim 10, wherein all of the first, second, and third filtering strengths are smaller than a filtering strength which is set if at least one of the adjacent blocks is encoded by the intra-frame prediction.

**12.** The video prediction decoding method according to any one of claims 9 to 11, wherein the first and second parameters are a weight and an offset, respectively, for changing pixel values of prediction signals of the blocks.

**13.** A video prediction encoder comprising:

input means which receives a plurality of pictures in a video sequence;

encoding means which encodes, through at least one method of intra-frame prediction and inter-frame prediction, pictures received by the input means to generate compressed data and encodes parameters for luminance compensation prediction between blocks obtained by dividing the picture;

restoration means which decodes the compressed data generated by the encoding means to restore the pictures as reproduced pictures;

filtering means which determines a filtering strength and a target region to be filtered, using at least the parameters for luminance compensation prediction between the blocks and performs executes filtering on the reproduced pictures restored by the restoration means, according to the filtering strength and the target region to be filtered; and

storage means which stores the reproduced pictures filtered by the filtering means, as reference pictures to be used to encode subsequent pictures.

**14.** A video prediction decoder comprising:

input means which receives first compressed data generated by encoding a plurality of pictures in a video sequence through at least one method of intra-frame prediction and inter-frame prediction and second compressed data generated by encoding parameters for luminance compensation prediction between blocks obtained by dividing the picture;

restoration means which decodes the first and second compressed data received by the input means to restore the pictures as reproduced pictures and to restore the parameters for luminance compensation prediction between the blocks;

filtering means which determines a filtering strength and a target region to be filtered, using at least the parameters for luminance compensation prediction between the blocks restored by the restoration means, and performs filtering on the reproduced pictures restored by the restoration means, according to the filtering strength and the target region to be filtered; and

storage means which stores the reproduced pictures filtered by the filtering means, as reference pictures to be used to restore subsequent pictures.

**15.** A video prediction encoding program executed by a computer to implement:

input means which receives a plurality of pictures in a video sequence;

encoding means which encodes, though at least one method of intra-frame prediction and inter-frame prediction, the pictures received by the input means to generate compressed data, and encodes parameters fort luminance compensation prediction between blocks obtained by dividing the pictures;

restoration means which decodes the compressed data generated by the encoding means to restore the pictures as reproduced pictures;

filtering means which determines a filtering strength and a target region to be filtered, using at least the parameters for luminance compensation prediction between the blocks, and perform filtering on the reproduced pictures restored by the restoration means, according to the filtering strength and the target region to be filtered; and

storage means which stores the reproduced pictures filtered by the filtering means, as reference pictures to be used to encode subsequent pictures.

**16.** A video prediction decoding program executed by a computer to implement:

input means which receives first compressed data generated by encoding a plurality of pictures in a video sequence through at least one method of intra-frame prediction and inter-frame prediction and second compressed data generated by encoding parameter for luminance compensation prediction between blocks obtained by dividing the pictures;

restoration means which decodes the first and second compressed data received by the input means to restore the pictures as reproduced pictures and to restore the parameters for luminance compensation prediction between the blocks;

filtering means which determines a filtering strength and a target region to be filtered, using at least the parameters for luminance compensation prediction between the blocks restored by the restoration means, and performs filtering on the reproduced pictures restored by the restoration means, according to the filtering strength and the target region to be filtered; and

storage means which stores the reproduced pictures filtered by the filtering means, as reference pictures to be used to restore subsequent pictures.

Fig.1

## Fig.2

PREDICTION SIGNAL GENERATOR 103

ADDER 110

QUANTIZER 107

STRENGTH DETERMINATION UNIT 301

DISTORTION REMOVING PROCESSOR 302

MASK PROCESSOR 303

FILTERING PROCESSOR 113

FRAME MEMORY 104

## Fig.3

EP 2 557 794 A1

**Fig.4**

```
                    ┌─────────┐
                    │  START  │
                    └────┬────┘
                         │
              ┌──────────────────┐
              │   MODE = SKIP     │──── S01
              └────────┬─────────┘
                       │
                    ◇ S02
          IS BLOCK A OR B          YES ──────────────────────────► MODE = INTRA_QUANT ── S03
          INTRA BLOCK?
                       │ NO
                    ◇ S04         ◇ S05              ◇ S07
          IS THERE          YES   IS SUM OF    NO    IS            YES
          NONZERO ────────────►   NUMBERS OF ─────►  DIFFERENCE ───────► MODE = PRED_MOT ── S08
          COEFFICIENT?            NONZERO            OF MOTION
                       │          COEFFICIENTS       VECTORS
                       │ NO       NOT LESS THAN      NOT LESS THAN
                       │          VALUE C?           VALUE D?
                       │              │ YES              │ NO
                       │              ▼                  ▼
                       │          MODE = PRED_SIGNIF    MODE = PRED_QUANT ── S09
                       │          ── S06
                    ◇ S10         ◇ S11              ◇ S12
          IS THERE          YES   ARE WEIGHT    YES  IS            YES
          DIFFERENCE OF ───────►  AND OFFSET ──────► DIFFERENCE ───────► MODE = IC_STRONG ── S13
          IC PARAMETERS?          BOTH               OF MOTION
                       │          DIFFERENT?         VECTORS
                       │ NO           │ NO           NOT LESS THAN
                       │         S18  │              VALUE D?
                       │     ┌──────────┐                │ NO
                    ◇ S17   │ MODE =    │                ▼
          IS DIFFERENCE YES │ MOT_DISC  │           MODE = IC_INTERMED ── S14
          OF MOTION ──────► └────┬─────┘
          VECTORS NOT LESS       │          ◇ S15
          THAN VALUE D?          └────────► IS            YES
                       │ NO                 DIFFERENCE ───────► MODE = IC_WEAK ── S16
                       │                    OF MOTION
                    NO ◄────────────────── VECTORS
                       │                    NOT LESS THAN
                  ┌─────────┐               VALUE D?
                  │   END   │                    │ NO
                  └─────────┘
```

*Fig.5*

```
                    ┌─────────────────────┐
                    │       ADDER         │──110
                    └─────────────────────┘
                              │
         ┌────────────────────┼────────────────────────┐
         │                    ▼      DISTORTION REMOVING│
         │              ┌──────────────┐      PROCESSOR │
         │              │LINEAR TRANSFORMER│──302a       │
         │              └──────────────┘                │
         │                    │                         │
┌──301   │                    ▼                         │
│        │              ┌──────────────────┐            │
┌────────────────┐      │ DISTORTION REMOVER│──302b     │
│   STRENGTH     │─────▶│                  │            │
│DETERMINATION UNIT│    └──────────────────┘            │
└────────────────┘      │                               │
         │                    ▼                         │
         │              ┌──────────────┐                │
         │              │ INVERSE LINEAR│                │──302
         │              │  TRANSFORMER  │──302c          │
         │              └──────────────┘                │
         │                    │                         │
         │                    ▼                         │
         │     ┌──────────────────────────┐            │
         │     │DISTORTION-REMOVAL-COMPLETED│──302d     │
         │     │    PICTURE GENERATOR       │            │
         │     └──────────────────────────┘            │
         │                    │                         │
         └────────────────────┼─────────────────────────┘
                              ▼
                    ┌─────────────────────┐
                    │   MASK PROCESSOR    │──303
                    └─────────────────────┘
```

24

## *Fig.6*

(a)

(b)

Fig.7

## Fig.8

(a)

Ma

Lp

B

Lq

(b)

Mb

Lp

B

Lq

## *Fig.9*

$$\text{START}$$

ACQUISITION OF REPRODUCED PICTURE $y$
AND AVAILABLE ENCODING PARAMETERS — S101

DETERMINATION OF DISTORTION REMOVAL MODE
BASED ON ACQUIRED ENCODING PARAMETERS — S102

ORTHOGONAL TRANSFORMATION
OF REPRODUCED PICTURE $y$
$d_{1:M} = H_j y$ — S103

DETERMINATION OF THRESHOLD,
BASED ON MODE, AND EXECUTION OF
DISTORTION REMOVAL USING THE THRESHOLD — S104

GENERATION OF DISTORTION-REMOVAL-COMPLETED
BLOCKS BY INVERSE ORTHOGONAL TRANSFORMATION
$\hat{x}_{1:M} = H_j^{-1} c_{1:M}$ — S105

GENERATION OF DISTORTION-REMOVAL-COMPLETED
PICTURE BY COMBINATION OF
DISTORTION-REMOVAL-COMPLETED BLOCKS — S106

MASK PROCESS
BASED ON DISTORTION REMOVAL MODE
$\hat{X}_{final} = mask(\hat{X}, y)$ — S107

STORAGE OF
DISTORTION-REMOVAL-COMPLETED PICTURE — S108

$$\text{END}$$

EP 2 557 794 A1

*Fig.10*

## Fig.11

```
VIDEO PREDICTION ENCODING                   ⌐P1
PROGRAM
                              ⌐P10
        ┌─────────────────────────────────┐
        │          MAIN MODULE            │
        └─────────────────────────────────┘
                              ⌐P101
        ┌─────────────────────────────────┐
        │          INPUT MODULE           │
        └─────────────────────────────────┘
                              ⌐P102
        ┌─────────────────────────────────┐
        │      BLOCK DIVISION MODULE       │
        └─────────────────────────────────┘
                              ⌐P103
        ┌─────────────────────────────────┐
        │       PREDICTION SIGNAL         │
        │      GENERATION MODULE          │
        └─────────────────────────────────┘
                              ⌐P104
        ┌─────────────────────────────────┐
        │      PICTURE STORAGE MODULE      │
        └─────────────────────────────────┘
                              ⌐P105
        ┌─────────────────────────────────┐
        │       SUBTRACTION MODULE         │
        └─────────────────────────────────┘
                              ⌐P106
        ┌─────────────────────────────────┐
        │        TRANSFORM MODULE          │
        └─────────────────────────────────┘
                              ⌐P107
        ┌─────────────────────────────────┐
        │       QUANTIZATION MODULE        │
        └─────────────────────────────────┘
                              ⌐P108
        ┌─────────────────────────────────┐
        │   INVERSE QUANTIZATION MODULE    │
        └─────────────────────────────────┘
                              ⌐P109
        ┌─────────────────────────────────┐
        │    INVERSE TRANSFORM MODULE      │
        └─────────────────────────────────┘
                              ⌐P110
        ┌─────────────────────────────────┐
        │         ADDITION MODULE          │
        └─────────────────────────────────┘
                              ⌐P111
        ┌─────────────────────────────────┐
        │    ENTROPY ENCODING MODULE       │
        └─────────────────────────────────┘
                              ⌐P112
        ┌─────────────────────────────────┐
        │          OUTPUT MODULE           │
        └─────────────────────────────────┘
                              ⌐P113
        ┌─────────────────────────────────┐
        │        FILTERING MODULE          │
        └─────────────────────────────────┘
```

*Fig.12*

P113

FILTERING MODULE

STRENGTH DETERMINATION MODULE — P301

DISTORTION REMOVING PROCESS MODULE — P302

P302a

LINEAR TRANSFORM MODULE

P302b

DISTORTION REMOVING MODULE

P302c

INVERSE LINEAR
TRANSFORM MODULE

P302d

DISTORTION-REMOVAL-COMPLETED
PICTURE GENERATION MODULE

MASK PROCESS MODULE — P303

## Fig.13

VIDEO PREDICTION DECODING PROGRAM — P2

P20
| MAIN MODULE |

P201
| INPUT MODULE |

P202
| DATA ANALYSIS MODULE |

P203
| INVERSE QUANTIZATION MODULE |

P204
| INVERSE TRANSFORM MODULE |

P205
| ADDITION MODULE |

P206
| OUTPUT MODULE |

P207
| PICTURE STORAGE MODULE |

P208
| PREDICTION SIGNAL GENERATION MODULE |

P209
| FILTERING MODULE |

*Fig.14*

30

CPU — 38

32 — WORKING MEMORY

33 — MEMORY

RECORDING MEDIUM

RM —

READING DEVICE

31

DISPLAY — 34

MOUSE — 35

KEYBOARD — 36

COMMUNICATION DEVICE — 37

*Fig.15*

**INTERNATIONAL SEARCH REPORT**

| International application No. |
| --- |
| PCT/JP2011/058439 |

A. CLASSIFICATION OF SUBJECT MATTER
*H04N7/32*(2006.01)i

According to International Patent Classification (IPC) or to both national classification and IPC

B. FIELDS SEARCHED

Minimum documentation searched (classification system followed by classification symbols)
H04N7/32

Documentation searched other than minimum documentation to the extent that such documents are included in the fields searched

| | | | |
| --- | --- | --- | --- |
| Jitsuyo Shinan Koho | 1922-1996 | Jitsuyo Shinan Toroku Koho | 1996-2011 |
| Kokai Jitsuyo Shinan Koho | 1971-2011 | Toroku Jitsuyo Shinan Koho | 1994-2011 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
| --- | --- | --- |
| A | JP 2004-32718 A (Microsoft Corp.), 29 January 2004 (29.01.2004), entire text; all drawings & US 7463684 B2 & EP 1359765 A2 & CN 1460924 A | 1-16 |
| A | WO 2009/084340 A1 (Sharp Corp.), 09 July 2009 (09.07.2009), entire text; all drawings & US 2010/0290532 A1 & EP 2234403 A1 & CN 101911705 A | 1-16 |
| A | JP 63-309082 A (Mitsubishi Electric Corp.), 16 December 1988 (16.12.1988), entire text; all drawings (Family: none) | 1-16 |

[X] Further documents are listed in the continuation of Box C.    [ ] See patent family annex.

| | |
| --- | --- |
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search<br>23 June, 2011 (23.06.11) | Date of mailing of the international search report<br>05 July, 2011 (05.07.11) |
| --- | --- |
| Name and mailing address of the ISA/<br>Japanese Patent Office | Authorized officer |
| Facsimile No. | Telephone No. |

Form PCT/ISA/210 (second sheet) (July 2009)

<div align="center">

**INTERNATIONAL SEARCH REPORT**

</div>

| | International application No. |
|---|---|
| | PCT/JP2011/058439 |

C (Continuation). DOCUMENTS CONSIDERED TO BE RELEVANT

| Category* | Citation of document, with indication, where appropriate, of the relevant passages | Relevant to claim No. |
|---|---|---|
| A | JP 2003-179933 A (Matsushita Electric Industrial Co., Ltd.), 27 June 2003 (27.06.2003), entire text; all drawings (Family: none) | 1-16 |
| A | JP 2007-129318 A (Sharp Corp.), 24 May 2007 (24.05.2007), entire text; all drawings (Family: none) | 1-16 |
| A | WO 2009/001793 A1 (Toshiba Corp.), 31 December 2008 (31.12.2008), entire text; all drawings & US 2009/0135389 A1 | 1-16 |

**EP 2 557 794 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20060153301 A
- WO 2006128072 A